# EUROPEAN PATENT SPECIFICATION

(11) **EP 2 834 058 B1**
(45) Date of publication and mention of the grant of the patent: **23.03.2016**
(21) Application number: 12715454.0
(22) Date of filing: 06.04.2012
(51) Int. Cl.: B29C 55/26, B29C 47/00, B29C 47/34, B29C 47/90, B29C 47/92, B29K 27/06

(54) **METHOD AND INSTALLATION FOR MANUFACTURING BIAXIALLY ORIENTED TUBING**
VERFAHREN UND ANLAGE ZUR HERSTELLUNG EINES BIAXIAL ORIENTIERTEN ROHRES
PROCÉDÉ ET INSTALLATION POUR LA FABRICATION DE TUBES À ORIENTATION BIAXIALE

(43) Date of publication of application: 11.02.2015
(73) Proprietor: HOPPMANN INTERNATIONAL B.V., 7701 BR Dedemsvaart (NL)
(72) Inventor: RIJNHART, Nicolaas, Wilhelmus, Hendrikus, NL-7577 ML Oldenzaal (NL)
(74) Representative: EP&C
(86) International application number: PCT/NL2012/050233
(87) International publication number: WO 2013/151420

(56) References cited:
- WO-A1-90/02644
- WO-A1-95/25627
- WO-A2-2011/049436
- US-A- 4 749 531
- US-A- 5 817 270
- US-A- 5 942 171

## Description

The present invention relates to the manufacturing of biaxially oriented tubing of thermoplastic material.

The manufacturing of biaxially oriented tubing of thermoplastic material has become an attractive method for the production of, for example, pipes of polyvinylchloride, which are now often indicated as O-PVC pipes. Such pipes are often used as pressure pipes, e.g. for transportation of water.

WO90/0264 A1 discloses a method and installation for the production of biaxially oriented pipe, in particular PVC pipe. This installation comprises tempering devices with a first external cooling device that is arranged downstream of the extruder and the die head and which externally cools the tube in preform condition emerging from the extruder die head. An upstream or first drawing device is arranged downstream of this first external cooling device. As is known in the art this upstream drawing device comprises multiple tracks, that engage on the outer face of the tube in preform condition, the speed of the fiction elements being controlled by a drive system. Further tempering devices are arranged in series downstream of the upstream drawing device.

In WO90/02644 A1 particular attention is paid to the uniformity or homogeneity of the temperature of the tube in preform condition as it arrives at the location where expansion by internal fluid pressure is performed. This document proposes a vigorous external cooling of the tube emerging from the die head by the first external cooling device that Is embodied as a cooling bath directly after the extruder and ahead of the upstream drawing device. This cooling provides the tube with a relatively cold and thereby strong outer layer that is not damaged by contact with the tracks of the drawing device. The temperature gradient within the wall of the tube is rather steep at this stage as the inside of the wall is still hot. Directly downstream of the drawing device the exterior of the tube is heated by passage through a bath with fluid that is held above the orientation temperature whereas the inside is now cooled by internal cooling, so that the temperature profile is somewhat equalized yet still outside the target orientation temperature range for effecting biaxial orientation. Then the tube is passed through a condition or finishing device having one or more baths in succession. This conditioning or finishing step takes place before the tube is expanded. The passage through the conditioning device causes the temperature profile across the wall to even out to within the target temperature range. As discussed in this document it is desired to achieve a temperature profile across the tube that lies within a narrow target range relative to the optimum temperature for molecular orientation as the behaviour of the plastic material, in particular of PVC, changes markedly even when small temperature differences are present. The document mentions that as a consequence thereof undesired differences in wall thickness of the finally obtained tubing may occur.

The method and installation described in WO90/02644 A1 are limited in their applicability and not satisfactory in their ability to reach the desired uniform temperature profile across the wall of the tube in preform condition just ahead of the expansion by fluid pressure, and as a consequence thereof do not provide the ability to obtain a tube with a uniform biaxial orientation in desired manner.

It is an object of the present invention to provide an improved method and installation to overcome the above mentioned problem or at least reduce said problem and improve the quality of the biaxially oriented tube that is produced.

The present invention provides a method according to claim 1, with the preamble based on WO2011/049436 A2.

The conditioning device is embodied as a hot air chamber or oven wherein air is circulated at a constant air temperature, e.g. at a temperature within the target orientation temperature range, preferably not exceeding said range.

The present invention is based on the insight that deviations from a uniform temperature within the wall of the tube in preform condition, in particular when considered in circumferential direction of the tube, mainly result from one or more of: the extruder and its die head, from the first external cooling, from the upstream drawing device when present, and possibly from any other device that has some effect on the temperature of the tube in said trajectory. It is now proposed to perform a sectorwise controllable heat exchange downstream of the first external cooling device, preferably downstream of the upstream drawing device when present, and upstream of the conditioning of the tube by the conditioning device. The sectorwise controllable heat exchange is controlled on the basis of one or more real-time measured temperatures of the tube. Preferably these measurements are done downstream of the conditioning device so that any remaining differences between actual measured temperatures and the related target orientation temperature range or target temperature profile are determined and the operation of at least the sectorwise heat exchange device is adjusted accordingly.

It has been found that the arrangement of the sectorwise heat exchange device upstream of the conditioning device is relevant in order to obtain an effective influencing of the temperature of the wall in each sector when desired. For example the relative low temperature of the outer layer of the tube as it has passed through the first external cooling device - and possibly also through the drawing device - allows for an effective heat transfer into a selected sector of the tube when the sectorwise heat exchange device is so operated. Once the tube has passed the conditioning device such heat transfer would be far less efficient and any sectorwise inputted heat would remain close to the outer face of the tube and not penetrate deeper into the wall as desired. In this respect it is noted that the tube in preform condition is commonly rather thick walled to allow for reduction of the wall thickness in the biaxial orientation process whilst increasing the diameter.

It has been found that the arrangement of the sectorwise heat exchange device downstream of the upstream drawing device when present also allows to compensate for any temperature deviations in the wall of the tube caused by the upstream drawing device itself, e.g. heat loss via contact with the friction elements and/or uneven heat dissipation due to the partial covering of the tube by the friction elements. Also this arrangement avoids any local loss of strength of the rather cold outer layer, which layer is desired in view of the engagement thereon by the friction elements.

It is noted that the gradual expansion of the tube by internal fluid pressure, preferably gas pressure, within the fluid volume is considered of relevance in conjunction with the described tempering of the tube in preform condition in order to achieve a high quality biaxial orientation process with uniform biaxial orientation of the plastic material. It is considered that due to this gradual expansion, preferably in absence of any contact with external parts in the trajectory wherein said fluid volume governed expansion takes place, the expanding tube is far less subjected to frictional forces than in prior art approaches wherein the tube is effectively drawn over a non-deformable conical expansion mandrel with which the tube is mainly in frictional contact. As will be explained below the invention envisages a preferred embodiment wherein the tube is in majority expanded by the fluid volume and then further expanded by being drawn over a non-deformable expansion portion of the expansion device, e.g. a conical portion, which leads to some frictional forces yet far less than with many prior art approaches wherein a non-deformable conical expansion portion effects the majority or even all of the expansion of the tube, possibly with a fluid film serving as a lubricant film. It has been found that reliance on such a lubricant film, e.g. of gas or liquid, between the tube and the expansion device is likely to result in significant variations of the fictional forces as the film may often show insufficiently stability with the result that occasionally and unpredictably frictional contact will occur whereby the biaxial orientation becomes less uniform.

In an embodiment the temperature sensing system comprises one or more internal temperature sensors that measure the temperature of the inner face of the tube in preform condition.

In an embodiment the temperature sensing system comprises one or more external temperature sensors that measure the temperature of the outer face of the tube in preform condition.

In an embodiment the temperature sensing system comprises both one or more internal temperature sensor and one or more external temperature sensors.

Based on the temperatures measured by the internal and/or external temperature sensors the system establishes, e.g. in a computer control unit of the installation or part thereof, an actual temperature profile across the wall of the tube in preform condition.

In a simple method and installation with N imaginary sectors in the tube wall, one may envisage N internal temperature sensors and N external temperature sensors, e.g. in pairs with one internal sensors generally opposite from one external sensor. For example the method is performed with the tube wall imaginary divided into a lower and an upper sector, so with N=2. In other embodiments N=3 (e.g. with 120 degree sectors) or N=4 (e.g. with 90 degree sectors, e.g. one at the bottom, one at the top, and two side sectors). Of course other numbers of sectors, e.g. more, e.g. 8 or more, for large diameter tubes, are also possible.

If desired multiple temperature sensors may be employed to monitor one sector, or possibly a movable sensor is employed to take measurements at multiple positions within a sector.

Preferably each internal temperature sensor is embodied as a contact temperature sensor that is directly in contact with the inner face of the tube.

Possibly each external temperature sensor is a contactless temperature sensor.

The sectorwise controllable heat exchange device is controlled on the basis of a comparison between an actual temperature profile across the wall of the tube in preform condition on the one hand and a target orientation temperature profile across the wall of the tube on the other hand. It will be appreciated that depending on the sophistication of the sensing system the temperature profile may be rather rudimentary, e.g. represented for each sector merely by a single inner face temperature and/or a single outer face temperature, or more complex, e.g. based on multiple measurements per sector and/or per face of the sector of the tube and/or approximated on the basis of a thermal modelling of the tube wall temperature.

In a practical embodiment the conditioning device has or consists of a single section wherein the outer face of the tube in preform condition is around its entire circumference exposed to a constant temperature environment. In another embodiment the conditioning device has multiple sections in series, wherein for example different constant temperatures are maintained to which the entire circumference of the passing tube is exposed.

The conditioning device may include an internal conditioning assembly that exposes the inner face of the tube in preform condition around its entire circumference to a constant temperature, e.g. a controlled temperature liquid circulation compartment within the lumen of the tube upstream of the expansion device.

It is envisaged that in practical embodiments the dwell time of the tube in preform condition within the conditioning device is significant longer than in the preceding sectorwise controllable heat exchange device, preferably at least 5 times longer, e.g. between 5 and 30 times longer.

For example the sectorwise controllable heat exchange device has a length between 0,3 and 1 meters.

For example the conditioning device has a length between 2 and 10 meters.

In practice it is preferred for the die head of the extruder to be provided with means for controlling and adjusting the annular passage of the die head in order to control the wall thickness and/or cross-sectional shape of the tube in preform condition emerging from the die head. Such devices are known in the art of extrusion of plastic tubes. For control of such a device it is preferred to arrange a measuring device downstream of the die head, possibly combined or integrated with the first external cooling device, which measuring device measures the emerging tube in preform condition to provide control signals for the annular passage of the die head.

In a practical embodiment the plastic material is PVC (polyvinylchloride).

In a preferred method the external cooling device cools an extruded PVC tube to a temperature of the outer layer of about 55 - 70°C. Preferably the cooling effected by the first external cooling device ahead of the upstream drawing device is such that the heat mass within the wall of the tube is between 85 -110% of the heat mass of the tube when within the target orientation temperature range, e.g. close to or just under 100% so that no or little extra heat input is required downstream of the upstream drawing device.

In a practical embodiment the sectorwise controllable heat exchange device comprises multiple independently controllable heat exchange units that are disposed at circumferentially spaced locations around the tube for heat exchange via the outer face of the tube.
In particular for relatively large diameter tubes in preform condition one can envisage an embodiment with multiple independently controllable heat exchange units that are disposed at circumferentially spaced locations within the lumen of the tube for heat exchange via the inner face of the tube.
For example radiation heating units are employed, e.g. infrared heating units.

In another exemplary embodiment heated air units are employed that each direct a heated air or gas stream onto a corresponding sector of the tube.
One may also envisage that the controllable heat exchange device is embodied with cooling units that perform a withdrawal of heat from the tube per sector, e.g. with cold air units that direct a cold air stream onto a selected sector of the outer and/or inner face of the tube.

As already indicated above, in a preferred embodiment the majority of the diametrical expansion of the tube is performed by internal fluid pressure caused by the fluid volume. The further expansion is then preferably caused by using an expansion device with a non-deformable expansion part having a gradually increasing diameter to a maximum diameter at a downstream end thereof. This expansion part is contacted by the tube that has been gradually expanded by the passage over the fluid volume and so acts as downstream sealing portion of the fluid volume. The expansion part also exerts an expanding force on the tube so as to bring about a further expansion of the tube. For example at least 60% of the diametrical expansion (e.g. comparing the original inner diameter to the expanded inner diameter of the tube) is brought about by the fluid volume, more preferably at least 75%.

In a practical embodiment use is made of an expansion device with a run-on part that is provided with a sealing member that is sealingly engaged by the tube in preform condition. This sealing member is arranged at a distance upstream of the expansion part and has a diameter that is greater than the run-on part downstream of the sealing member, e.g. embodied as a bulbous member. The sealing member forms an effective seal that prevents the fluid in the fluid volume from reaching the lumen of the tube upstream of the sealing member.
In a practical embodiment one or more internal temperature sensors are integrated in the sealing member.
In a practical embodiment the sealing member is an annular sealing member fitted on the run-on part, e.g. a metallic member, and wherein said sealing member includes a conical run-on surface for the tube, gradually increasing in diameter in downstream direction.

As is known in the art, an embodiment of the invention proposes that use is made of an expansion device having a run-off part downstream of the expansion part. As is preferred a second fluid volume is established between the run-off part of the expansion device and the oriented tube, preferably between a reduced diameter section of the run-off part and the oriented tube, and wherein preferably the fluid supplied to said second fluid volume is a pressurized gas, e.g. air, possibly a heated gas.

In an embodiment the run-off part of the expansion device has a reduced diameter section having a smaller diameter than the maximum diameter of the expansion part. At least one outer diameter ring member, preferably two spaced apart ring members, is arranged around this reduced diameter section. The outer diameter ring member is arranged such that the oriented tube passes through the ring member while being in contact with said ring member. The outer diameter ring member and the reduced diameter section are dimensioned such that seizing of the oriented tube between the run-off part and the at least one outer diameter ring member is avoided, preferably the inside of the oriented tube being radially spaced from the reduced diameter section. As is preferred the expansion device has one or more fluid supply ducts having one or more ports in the reduced diameter section, a gas being supplied between said reduced diameter section and the oriented tube to establish a second fluid volume there between.
In an embodiment use is made of an external cooling device that is adapted and operated to cool the oriented tube externally while passing over the run-off part, e.g. by effecting external cooling in the area between two spaced apart outer diameter ring members.

In an embodiment of the invention the expansion part has a first conical surface increasing in diameter in downstream direction, adjoined at its downstream end by a cylindrical surface of a first diameter, adjoined at its downstream end by a second conical expansion surface increasing in diameter in downstream direction, and wherein preferably the diameter of the sealing member on the run-on part is greater than the first diameter of the expansion part.

The fluid supply device that supplies the fluid to the fluid volume is preferably embodied to supply a gas, e.g. air, e.g. via a compressor or other pressurized gas source to the one or more supply ducts in the expansion device. The use of a gas, e.g. air, has some advantages over the use of a liquid, e.g. that of undesirable thermal effects, of undesirable effects of the weight of the fluid in the fluid volume, and of any problems associated with liquid that is entrained with the tube to beyond the expansion device are avoided.

The use of a gas, e.g. air, as fluid allows to perform the production method such that a pressurized gas volume is entrapped between the tube on the one hand and a run-on part and the expansion part of the expansion device on the other hand, the tube in preform condition sealingly engaging a sealing member on the run-on part as well as sealingly engaging on at least a downstream portion of the expansion part, e.g. near or at the transition to the run-off part of the expansion device. The pressure of the entrapped gas volume then causes internal fluid pressure on the tube and so gradual expansion of the tube already before the tube actually contacts the expansion part. The passage over at least the downstream portion of the expansion part of the expansion device then governs a further, possibly final, stage of the circumferential orientation of the thermoplastic material. Clearly the volume of gas causes no frictional resistance to the movement of the tube, which is advantageous.

The presence of a sealing member and its sealing effect allow for a significant and stable gas pressure in said fluid volume and thereby for effective use of gradual expansion by internal gas pressure of the tube prior to contact with the expansion part. The tube, having undergone some expansion, e.g. a selected degree of expansion as will be explained below, then contacts the expansion part and is then subjected to further expansion under the influence of the non-deformable expansion part.

The start-up of the production installation and method is also greatly facilitated by the presence of the sealing member, its sealing effect, and the possibility to supply gas under pressure between the run-on part and the tube downstream of the sealing member. During start-up the tube in preform condition is made to pass over the sealing member and then to come into contact with the expansion part. Gas is then supplied in this region between the run-on part and the tube, so that the tube expands under said internal gas pressure. As is preferred in this start-up procedure, the tube - in the region between the sealing member and the maximum diameter of the expansion part, is made to expand locally to a large diameter that is at least as great as the maximum diameter of the expansion part so that upon continued progress of the expanded portion of the tube in downstream direction, said portion of large diameter passes easily over the maximum diameter portion of the expansion device. Once the passing of the tube over the expansion device has stabilized in this start-up procedure, the gas pressure in this volume can be relieved so that - during normal production of biaxially oriented tube - a reduced expansion is effected by the gas pressure and the remainder of the expansion is effected by contact with the expansion part.

The pressure of the gas in said gas volume could be controlled by means of a pressure control valve in the supply means for the gas.

It is preferred to have - in addition to said one or more supply ducts - one or more gas discharge ducts that are formed in the expansion device, said one or more discharge ducts having one or more inlet ports in the exterior surface of the expansion part of the expansion device, an inlet port being open or closed or partly closed dependent on whether or not the inlet port is covered and closed by the tube or to which portion of the inlet port is closed by the tube. A gas discharge duct then provides for the relief of gas pressure from the fluid volume when the one or more corresponding inlet ports are at least partly open, and thus establishes a control of the expansion of the tube that is caused by internal gas pressure. In this embodiment the tube itself basically acts as valve in combination with a simple inlet port or inlet ports (e.g. distributed in circumferential direction) and allows to dispense with a complicated gas pressure control valve arrangement. This embodiment also allows for a fail-safe operation of the installation as the gas pressure in said fluid volume can never become excessive. A simple open-close valve may be provided for the discharge duct, e.g. to close a discharge duct during start-up of the method as increased expansion of the tube by internal gas pressure may then be used advantageously as explained above.

In a further preferred embodiment multiple inlet ports, each associated with a corresponding discharge duct, are provided at differing diameter positions in the exterior surface of the expansion part, said differing diameter positions having different radial distances from the central longitudinal axis of the expansion part. One or more operable valves, e.g. open-close valves, are associated with the discharge ducts, so that a selected inlet port and associated discharge duct can be made effective to allow for relief of gas pressure when the tube does not fully cover and close said inlet port. At the same time the other non-selected inlet ports and associated discharge ducts are then made ineffective by closing the associated valve or valves. This embodiment allows to control the internal diameter of the tube as it is effectively expanded by the internal gas pressure in the fluid volume and reaches the expansion part of the expansion device. This allows for a simple selection of the degree of expansion to be obtained via the internal gas pressure versus the remaining expansion via contact with the expansion part.

In a possible embodiment of the method - for temperature conditioning of the tube in preform condition- a liquid circulation compartment is formed in the lumen of the tube between a closing member that is arranged at a distance upstream from a nose end of a run-on part of the expansion device n the one hand and the sealing member on the other hand, wherein a liquid is circulated through said liquid circulation compartment. This method allows to establish an effective internal temperature conditioning of the tube in preform condition directly upstream of the expansion device. In practice said internal temperature condition may be effected with hot water, e.g. close to the orientation temperature, e.g. close to the boiling temperature of water. The closing member is located such that a suitable length of the liquid circulation compartment is obtained. The closing member may if desired be arranged at the die head or close to the die head, e.g. as shown in WO95/25626, figure 3. In another arrangement the closing member is arranged between the die head and the expansion device, or it can be envisaged to employ multiple liquid circulation compartments between the die head and the expansion device by means of multiple closing members and associated liquid circulation ducts.

In a possible embodiment one or more internal temperature sensors are provided on the expansion device at or near the sealing member, most preferably at the sealing member and in direct contact with the inner face of the tube, allowing to measure the temperature of the preform in said region. The intimate contact between the tube in preform condition and the sealing member is beneficial for the reliability and accuracy of the temperature sensing when said one of more sensor are integrated in the sealing member.
It is preferred for said one of more temperature sensors for the inner face of the tube to be integrated in the sealing member, or to be located upstream thereof on an anchoring rod, e.g. within a distance of at most 2 meters from the sealing member.

It may be envisaged to have multiple temperature sensors for the inner face of the preform, each sensing the temperature of a sector of the inner face when seen in circumferential direction of the inner face.
Preferably said one or more temperature sensors for the inner face of the preform are in direct contact with said inner face.
The one or more sensors that sense the inner face temperature may be wired to one or more associated control units or may be of the wireless communication type.

In an embodiment the maximum diameter of a non-deformable expansion part governs the final stage of expansion in circumferential direction of the tube. In this embodiment any part of the expansion device - other than the reduced diameter section - downstream of said maximum diameter has a diameter at most equal to the maximum diameter of the expansion part.

In another possible embodiment a downstream portion, e.g. an end portion, of a run-off part of the expansion device has a greater diameter than the maximum diameter of the expansion part, and a fluid volume with pressurized fluid between the reduced diameter section and the tube is used to cause further expansion of the tube.

It is preferred for the run-off part to be of non-deformable design. However it is also envisaged e.g. that the run-off part includes an expandable portion, e.g. an inflatable plug, e.g. at the downstream end thereof, e.g. limiting the downstream end of the reduced diameter section.

The reduced diameter section preferably has a diameter that is at least 4 millimetres less than the maximum diameter of the expansion part. Preferably the diameter of the reduced diameter section is about twice the wall thickness of the tube passing over the run-off part of the expansion device less than the maximum diameter of the expansion part. Preferably the reduced diameter section has a diameter of at least 80% of the maximum diameter of the expansion part.

The outer diameter ring member is arranged around the reduced diameter section, with the radial spacing between said ring member and the reduced diameter section being more than the projected wall thickness of the tube at said location, so that radial play remains that allows for a possible variation in the wall thickness of the tube during the production process at said location, e.g. to minor disturbances in the process, without the risk that said tube becomes stuck between the ring member and the reduced diameter section of the run-off part. Preferably a radial spacing is maintained between the reduced diameter section and the inside of the oriented tube.

Preferably each outer diameter ring member is non-deformable, at least as the diameter of its opening through which the tube passes is concerted, under the influence of the contact with the tube passing through the opening of the ring member. E.g. the ring member is made of a rigid material, e.g. a metal or other thermally conductive material.

In a practical embodiment each ring member has an axial dimension less than the diameter of the opening therein for the tube. E.g. a ring member has an axial length of between 0.5 and 5 centimetres. It is however also possible that a ring member is formed as an elongated sleeve, e.g. having a length greater than the diameter of the opening therein for the tube.

In a possible embodiment an outer diameter ring member includes one or more internal conduits, e.g. annular internal conduits, through which a cooling fluid is passed, e.g. cooling water, to effect a cooling of the contact surface with the oriented tube. In a possible embodiment the external cooling device is integrated with the one or more outer diameter ring members, as each ring member has one or more internal conduits through which cooling fluid is passed, e.g. a single outer diameter ring member being used having a length greater that the diameter of the opening therein for the tube, e.g. between 1 and 2 times said diameter.

The external cooling of the tube by the external cooling device while passing over the run-off section is preferably performed in the absence of internal cooling of the tube while passing over the expansion device, or even more preferably also in the absence of any internal cooling downstream of the expansion device.

In a preferred embodiment use is made of an upstream outer diameter ring member and a downstream outer diameter ring member, said ring members being arranged in series and spaced apart. Through these ring members the oriented tube passes at the location of the reduced diameter section of the run-off part. By providing multiple, preferably two, ring members at spaced apart axial locations along the reduced diameter section of the run-off part, various possibilities are provided for the operator to influence the production process and the finally obtained tubing.

Preferably an external cooling device cools the oriented tube between the upstream and downstream outer diameter ring members. Preferably an intense external cooling is effected here, preferably by the outer surface of the tube being exposed, so not covered by the one or more ring members, and subjected to sprays or jets of cooling liquid, e.g. water.

In a preferred embodiment at least one outer diameter ring member, e.g. both an upstream and a downstream ring member, is embodied as a constrictive outer diameter ring member, said ring member exerting a radial constrictive force on the oriented tube passing there through during the production process, thereby reducing the outer diameter of the oriented tube, at least over a short axial length. In a preferred embodiment the upstream outer diameter ring member exerts a constrictive force on the oriented tube which contributes to a sealing engagement of the oriented tube with the expansion device at the transition between the expansion part and the run-off-part. As will be explained in more detail below this approach is e.g. favourable when a fluid, that is a liquid or a gas, is introduced between one or more parts of the expansion device on the one hand and the tube on the other hand.

In a preferred embodiment at least one outer diameter ring member, e.g. an upstream ring member, is displaceable in axial direction. By suitable selection and/or adaptation of the axial position of the one or more outer diameter ring members with respect to the run-off part, e.g. the snap-back effect can be influenced and thus the final dimension of the oriented tube controlled. In particular it is envisaged that the axial displacement of one or more outer diameter ring members is effected in combination with a control, and - possibly automatic - adjustment, of the cooling effect of the first external cooling device.

In a preferred embodiment a first fluid volume is present between the expansion device and the tube at a position upstream of the maximum diameter of the expansion part, and a second fluid volume is present between the run-off part and the tube. The sealing engagement in a region at or near the maximum diameter of the expansion part generally prevents an uncontrolled communication between the two fluid volumes and thus e.g. instability of said fluid volumes and/or mixing of fluids, e.g. upstream pressurized air for the first volume and a liquid, e.g. heated water being used for the second volume.

In a possible embodiment use is made of an expansion device with a valve controlled passage in communication with the first fluid volume and with the second fluid volume, wherein the expansion device includes at least one fluid supply conduit which introduces fluid into the first and/or second fluid volume. As mentioned above the sealing engagement at the maximum diameter avoids an uncontrolled communication between said fluid volumes. The valve controlled passage however allows the operator to e.g. equalize pressure in both volumes, or first establish a first fluid filled volume upstream of the maximum diameter sealing region and then let the fluid flow into the second volume downstream of said region. One or more pressure sensors may be provided to sense the actual fluid pressure in a fluid volume. The valve controlled passage, including the valve, can be integrated entirely in the expansion device in the lumen of the tube. However it is also possible for this valve controlled passage to be present outside of the tube and extruder, e.g. as part of the external portion of the fluid supply device.

It is also an option that a first fluid supply duct introduces fluid into the first fluid volume and a second fluid supply duct introduces fluid into the second fluid volume. The fluids may be the same or different, e.g. water and air.

In particular it is envisaged in this preferred embodiment to provide the expansion device with one or more fluid supply ducts having one or more ports in the outer surface of the run-on part and/or expansion part preferably the run-on part being provided with a sealing member according to the first aspect of the invention.

The present invention also relates to the associated installations for performing the method according to the invention.

The method according to the invention is for instance suitable to produce individual tube elements by severing such elements from the endless produced biaxially oriented tube, which elements are later provided with a socket in a socketing operation, allowing tubes to be connected end to end by inserting an end into a socketed end of another tube, the socket preferably including a sealing ring.

The method according to the invention may also include the further step of making individual biaxially oriented tubing elements by severing a tubing element from the tube that extends from the extruder, over the expansion device, and beyond the downstream drawing device downstream of the expansion device, e.g. tubing elements having a length between 5 and 15 metres, e.g. 6 metres, and the step of providing a socket on an end of each individual tubing element so that individual tubing elements are connectable via a socket connection.

Also disclosed is a biaxially oriented tube obtainable with a method according to the invention. In a preferred embodiment the tube is a biaxially oriented tube of polyvinylchloride. In a preferred embodiment the tube obtained is a water or gas transport pipes, e.g. for potable water, e.g. of polyvinylchloride.

For example it is envisaged to produce with a method according to one or more of the aspects of the invention a biaxially oriented pipe, e.g. of PVC, having a pressure rating above 8 Bar, e.g. of 12,5 Bar, at 20°C, e.g. with an outer diameter between 63 and 630 millimetres.

The wall thickness of the biaxially oriented pipe produced with a method according to one or more of the aspects of the invention may lie in practice between, for example, 3 and 10 millimetres.

The aspects of the invention and preferred embodiments thereof will now be described with reference to the drawings. In the drawings:
Fig. 1 a, 1 b and 1 c show schematically an example of an installation for producing biaxially oriented thermoplastic tubing according to the present invention,
Fig. 2 shows schematically in longitudinal section a part of the installation of figures 1 a,b,c,

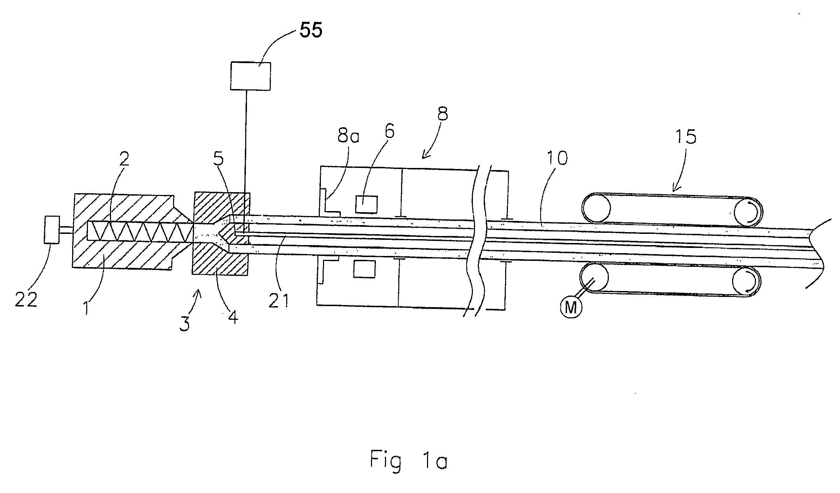

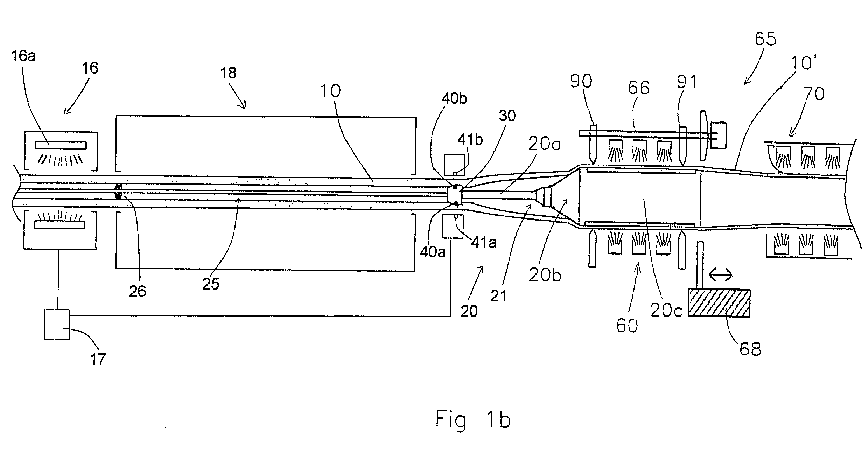

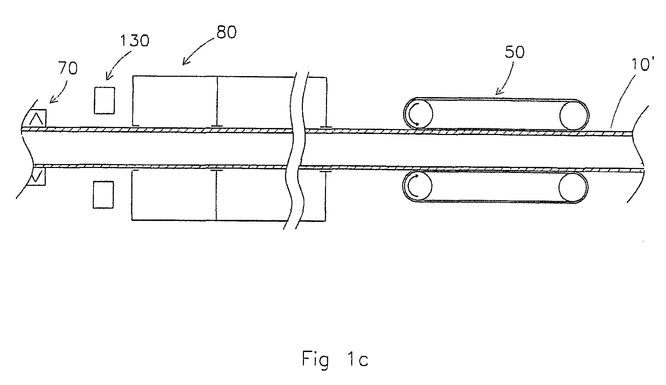

Figures 1a, 1b and 1c are not to scale and schematically show consecutive portions of an example of an installation for producing biaxially oriented thermoplastic tubing. The installation is shown to elucidate the present invention and optional and/or preferred details thereof.

The installation comprises an extruder 1 having one or more extruder screws 2 by means of which a flow of thermoplastic material is provided, e.g. of polyvinylchloride (PVC).

The thermoplastic material is fed to a die head 3 arranged on the extruder 1. The die head 3 has an outer body 4 and an inner die member 5, which together with the outer body 4 defines an annular passage from which an extruded tube in preform condition 10 of thermoplastic material emerges, as is preferred in a substantially horizontal direction. The inner die member 5 forms a lumen or axial inner cavity in the tube in preform condition 10.
As is common in this technology a rather thick walled tube in preform condition 10 is extruded, the wall thickness later being reduced and the diameter being increased by the biaxial orientation process.

In an alternative embodiment the die head 3 is an offset die head 3 with an inlet for the extruded material at a lateral side of the die head and with a central axial passage through the die head 3, essentially through the inner die member 5.

Preferably the die head 3 is provided with means for controlling and adjusting the annular passage in order to control the wall thickness and/or cross-sectional shape of the tube in preform condition 10 emerging from the die head 3. This type of die head 3 is known in the art. Preferably an appropriate measuring device 6 is arranged downstream of the die head 3 and measures the emerging tube in preform condition 10 to provide control signals for the die head 3.

As is preferred an external cooling device 8, preferably using water, is arranged downstream of the extruder 1 and the die head 5 to externally cool the thick walled tube in preform condition 10 in a vigorous manner. The external cooling device 8 may e.g. comprise a number of compartments behind one another through which cooling water is circulated, the tube in preform condition 10 being in direct contact with the cooling water in each compartment. The temperature of the cooling water may vary from one compartment to another. If desired, it can be arranged that the cooling water circulation in each compartment may be switched on or off.

In a practical embodiment the plastic material is PVC (polyvinylchloride). It is then preferred that the external cooling device 8 cools the extruded PVC tube such that an outer layer of the tube obtains a temperature of about 55 - 70°C. This renders said relatively cold outer layer sturdy enough to withstand engagement by upstream drawing device 15.

The cooling device 8 preferably removes so much heat from the extruded tube that the remaining heat mass within the wall of the tube is between 85 - 110% of the heat mass of the tube when within the target orientation temperature range, e.g. close to or just under 100% so that no or little extra heat input is required downstream of the upstream drawing device 15.

An outer diameter calibrating device 8a may be provided at the upstream end of the external cooling device 8.

As is preferred, downstream of the external cooling device 8 an upstream drawing device 15, which may also be referred to as a tube speed-control device as its main task is to control the speed of the tube at said location, is arranged. Preferably said device 15 includes multiple tracks engaging on the outer face or exterior of the tube in preform condition 10. The speed of the tracks is controlled by a suitable track drive system, e.g. with one or more electronic drive motors. Such drawing devices 15 are customary in plastic pipe extrusion.

The figure 1 b also illustrates the presence of a sectorwise controllable heat exchange device 16 and a conditioning device 18 that are arranged in series ahead of the location where expansion by fluid pressure of the tube takes place, here as is preferred, downstream of the upstream drawing device 15.

The heat exchange device 16 in this example comprises multiple independently controllable heat exchange units 16a, here infrared heaters, that are disposed at circumferentially spaced locations around the tube 10 for heat exchange via the outer face of the tube. In another exemplary embodiment heated air units are employed that each direct a heated air or gas stream onto a corresponding sector of the tube.

In this example it is proposed that the tube 10 is divided into four imaginary sectors, with a bottom sector, a top sector, and opposed side sector. For each imaginary sector of the tube at least one unit 16a is provided, the units being controlled by control unit 17.

Following downstream the tube passes through the conditioning device 18 wherein the tube in preform condition is exposed in one or more successive sections, here one as is preferred, of the conditioning device to a conditioning temperature that is - in each section - uniform in circumferential direction of tube so that said conditioning device causes the temperature profile across the wall of the tube in preform condition to even out to a temperature profile within a target orientation temperature range.

As explained, the device 18 is embodied as a hot air chamber or oven wherein air at constant temperature is circulated to contact the entire outer face of the tube. As is preferred the air is held at a temperature close to the desired orientation temperature.

As illustrated the conditioning device 18 is significantly longer than the device 16, so that the dwell time in the device 18 is also much longer than in the device 16 as is preferred. Preferably the dwell time is at least 5 times longer, e.g. between 5 and 30 times longer in device 18 than in device 16.

The figure 1 b further schematically depicts an expansion device 20. The expansion device 20 is held in place by means of an anchoring rod 21 that is at one end fastened to the expansion device 20. The anchoring rod 21 is connected to the die head 3.

As is preferred a force sensing assembly 22 is provided to measure the pull force on the anchoring rod 21 during operation of the installation.

As is preferred the anchoring rod 21 has one or more internal ducts, e.g. for supply and discharge of fluid; liquid and/or gas (e.g. air); to locations within the lumen of the tube and/or to the expansion device 20. Also the anchoring rod 21 may include one or more ducts for electrical wiring, e.g. to connect to one or more sensors (e.g. pressure and/or temperature) in the lumen of the tube and/or the expansion device, or e.g. to control one or more valves or other electronic components, possibly housed within or at the downstream end of the expansion device 20.

In general the expansion device 20 shown here includes - from upstream to downstream end thereof - a run-on part 20a, an expansion part 20b, and a run-off part 20c. The expansion part 20b - as is preferred - has at least one non-deformable or rigid portion with a gradually increasing diameter in downstream direction, e.g. of conical shape, e.g. with the outer surface of a truncated cone, so as to come into contact with the tube 10 and to exert an expanding force on the tube 10 that brings about diametrical expansion of the tube 10. The expansion part 20b has a maximum diameter at its downstream end, the run-off part 20c here has a diameter that does not exceed said maximum diameter, in fact is preferably less over a reduced diameter section as will be explained below.
The expansion part 20b and as is preferred also the run-on part 20a and the run-off part 20c here are of rigid, non-deformable embodiment.

The run-on part 20a here is of an elongated, generally cylindrical design. The diameter of the run-on part 20a substantially corresponds to the diameter of the lumen within the preform 10 upstream of the expansion device 20. The run-off part 20c here is of a generally cylindrical design.

The expansion device 20 is embodied to cause the majority of the circumferential expansion of the tube in the preform condition into a biaxially oriented tube on the basis of internal fluid pressure in a relative large fluid volume 21 inside the lumen of the tube, between the tube and the expansion device 20.

The expansion device 20 here includes an upstream sealing member 30 that fits sealingly into the yet unexpanded tube 10 in preform condition. This member 30 delimits the volume 21 at its upstream end. As is preferred the member 30 is mounted or formed at the nose end of the run-on part 20a of the expansion device 20.

Here, use is made of an expansion device 20 having one or more fluid supply ducts 27 (a portion of which is schematically depicted) to form the fluid volume 21 between the expansion device 20 and the tube 10. The fluid may be water or another liquid, but as mentioned already a gas, e.g. compressed air, is highly preferred. The use of a gas will e.g. avoid any problems associated with the presence of water residue on the inside of the tube downstream of the expansion device.

The one or more gas supply ducts 27a here have a port in the outer surface of the run-on part 20a and/or the expansion part 20b of the expansion device, e.g. at 27b. Possibly gas is supplied between the tube and the expansion device directly downstream of the sealing member 30. The gas stems from a source such as for example an compressor (not depicted here).

As is preferred the fluid volume is established over the entire length of the run-on part 20a downstream of the sealing member 30, more preferably also over the upstream portion of the expansion part 20b.

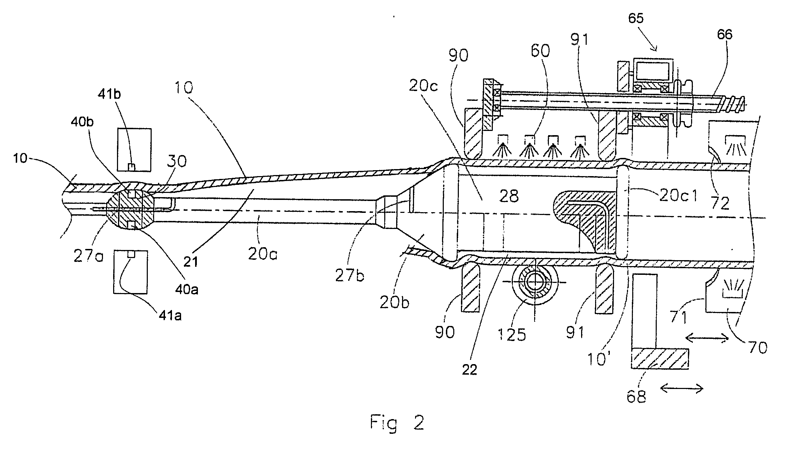

As will be explained below a second or downstream fluid volume is preferably formed over at least a portion of the run-off part 20c, preferably a sealing engagement of the tube with the expansion device in a region at or near the maximum diameter of the expansion part forming a barrier with an upstream fluid volume 21. The one or more gas supply ducts 27a are embodied to have a port in the outer surface of the run-off part 20c, as depicted by way of example in the portion shown in cross-section of figure 2, in order to feed pressurized fluid, preferably gas, to said second fluid volume.

The first or upstream fluid volume 21, in conjunction with the presence of the sealing member 30, allows to have a relatively long run-on part 20a which is beneficial for the stability of the tube 10 when leading up to the expansion part 20b, the fluid volume 21 preventing excessive frictional contact between the tube in preform condition and the run-on part, more preferably as said contact is concentrated solely on the sealing member 30.

As can be seen in figures 1 b, 2 the tube 10 gradually expands in circumferential by being internally pressurized by gas pressure in volume 21. The tube 10 then contacts the conical expansion part 20b which then acts as the downstream sealing portion of the device 20 that delimits the fluid volume 21 at its downstream end.

As can be seen the expansion part 20b causes a further expansion of the tube 10, as is preferred said expansion is less than the expansion caused by the fluid volume pressure. For example the inner diameter of the tube expands at least 50% of its total expansion by the fluid volume pressure, more preferably at least 65%, or even more preferred at least 80%. The remainder is preferably caused by the passing of the tube over the conical part 20c, most preferably no further expansion takes place downstream thereof but this is not excluded.

At a distance downstream of the expansion device 20, as is common in this technology, a further or downstream drawing device 50 is arranged. This drawing device 50 is adapted to exert a considerable tensile force on the oriented tube 10.

As is preferred an external cooling of the oriented tube 20 is effected soon after the diametrical expansion of the tube 10 has been brought about, preferably -as here - whilst the tube 10 passes over the run-off part 20c, most preferably starting close to, yet not on, the expansion part 20b. For this reason a first external cooling device 60 is provided. This first cooling device 60 preferably includes one or more nozzles spraying or jetting cooling water onto the exterior surface of the oriented tube, preferably with a significant cooling capacity to arrive at an intense external cooling. Other preferred details will be explained below.

As is preferred at least one further or second external cooling device 70 is arranged at a relatively short distance downstream of the expansion device 20. This second external cooling device 70 preferably includes one or more nozzles spraying or jetting cooling water onto the oriented tube 10.

As is preferred yet another or third external cooling device 80, preferably embodied with one or more compartments as described with reference to cooling device 8, is arranged downstream of the device 70 and upstream of the drawing device 50 to cool the oriented tube 10 to a final, e.g. ambient, temperature.

Downstream of the drawing device 50 the oriented tube 10 may e.g. be cut to individual tube elements with e.g. a sawing, cutting or milling device or the tube, when appropriate may be spooled onto a reel. This equipment is known in the art.

It is envisaged, in a preferred embodiment, that no calibration of the outer diameter of the biaxially oriented tube by passing the tube through a sizing opening of a calibration device is effected downstream of the expansion device 20. This is considered to avoid a loss of strength of the finally obtained tube due to the impact of the sizing device on the tube.

As is preferred, there is no external part of the installation at the height of the sealing member 30 that presses the tube in preform condition 10 onto the sealing member 30 as this would cause a risk of damaging the tube in preform condition, of disturbing the expansion and also entail a risk of seizing of the tube in preform condition between the sealing member 30 and any external part.

The installation comprises a temperature sensing system with temperature sensors 40a,b, 41a, b which measure the temperature of the tube 10 in preform condition at multiple positions in circumferential direction of the tube at one or more (here one) locations downstream of the upstream drawing device 15, here - as is preferred - downstream of the conditioning device 18, which one or more locations are ahead of the gradual expansion of the tube by the fluid volume 21, preferably just ahead as will be explained by way of example below.

The sectorwise controllable heat exchange device 16 is controlled on the basis of a comparison between the temperatures that are measured by the temperature sensing system 40a, b, 41 a, b on the one hand and a target orientation temperature range on the other hand, which comparison is here made in unit 17 to which the sensors are linked.

As illustrated the temperature sensing system comprises one or more internal temperature sensors 40a, b that measure the temperature of the inner face of the tube in preform condition upstream of or at the upstream sealing member 30 of the expansion device 20, and comprises one or more external temperature sensors 41a, b that measure the temperature of the outer face of the tube in preform condition upstream of or at the upstream sealing member 30 of the expansion device.

As is preferred the internal temperature sensors 40a, b are integrated into the sealing member 30, but other arrangements, e.g. some distance upstream of the member 30, e.g. within a distance thereof of up to two meters, are also possible.

As is preferred here four sensors 40 and four sensors 41 are used, equal to the number of sectors into which the tube is imaginary divided.

The temperatures measured by the internal and external temperature sensors are used to establish an actual temperature profile across the wall of the tube 10 in preform condition, e.g. represented by said measured values.

The sectorwise controllable heat exchange device is controlled on the basis of a comparison between the actual temperature profile across the wall of the tube in preform condition on the one hand and a target orientation temperature profile across the wall of the tube on the other hand.

As an optional feature for temperature conditioning of the tube in preform condition 10 a liquid circulation compartment 25 is formed in the lumen of the tube in preform condition 10 between a closing member 26 at a distance upstream from the nose end of the run-on part 20a on the one hand and the sealing member 30 on the other hand. A liquid of controlled temperature, e.g. water, is circulated through said liquid circulation compartment in direct contact with the inside of the tube in preform condition 10. This allows to establish an effective internal temperature conditioning of the tube in preform condition directly upstream of the expansion device. In practice said internal temperature condition may be effected with hot water, e.g. close to the orientation temperature, e.g. close to the boiling temperature of water when producing biaxially oriented PVC tubing.

The closing member 26 here is arranged on the anchoring rod 21, but may be arranged on the inner member 5 of the die head 3. By choosing the location of the closing member 26 the effective length of the compartment 25 can be established.

The water to be circulated through the compartment 25 is supplied from a water source, preferably including a pump and a water heater, via one or more ducts in the rod 21. The return flow of water leaving the compartment 25 is discharged via one or more other ducts in the rod 21.

In a practical embodiment the sealing member 30 could have a diameter that is between 4 and 20 millimetres greater than the diameter of the downstream located portion of the run-on section.

The sealing member 30 forms an effective and reliable seal that prevents the fluid, which is supplied at an elevated pressure that is sufficient for the formation of a fluid volume, from reaching the lumen of the tube in preform condition 10 upstream of the sealing member 30. When the production is performed with the presence of compartment 25, and with - as is preferred - a relatively low pressure of the water in said compartment, it is understandable that the fluid will try to reach said lower pressure zone upstream, the sealing member reliably avoiding this effect. This allows for a stable fluid volume between the expansion device, preferably both the run-on part and the expansion part, and the tube, as any escape of fluid to upstream of the sealing member 30 will cause a pressure drop in the volume and thus instability.

As preferred feature thereof, the run-off part 20c, which is downstream of a the expansion part 20b, has a reduced diameter section having a smaller diameter than the maximum diameter of the expansion part 20a. Possibly the reduced diameter section directly adjoins the maximum diameter cross-section, so that a diameter reduction step occurs directly behind said maximum diameter position. This can be clearly seen in figure 2.

Use is made here of at least one outer diameter ring member, here - as preferred - two ring members 90, 91, through which the tube 10 passes at the location of the run-off part of the expansion device, here at the location of the reduced diameter section of the run-off part 20c. As is preferred the ring members 90, 91 here are each embodied as a constrictive outer diameter ring member, which means that each ring member 90, 91 exerts a radial constrictive force on the tube 10 passing there through, thereby reducing the outer diameter of the tube 10, at least over a short axial distance. In practice this means that the opening within each ring member 90, 91 has a diameter which is less than the projected outer diameter of the oriented tube 10 at said location during the normal production process.

The reduced diameter section here is dimensioned so as to avoid a problem of seizing of the tube between the expansion device 20 and the at least one outer diameter calibrating ring 90, 91.

The reduced diameter section preferably has a diameter that is at least 4 millimetres less than the maximum diameter of the expansion part 20b of the expansion device 20. Preferably the diameter reduction is about twice the wall thickness of the tube passing over said section.

By providing the reduced diameter section the outer diameter ring members 90, 91 can be arranged around said reduced diameter section, with the radial spacing between said ring members 90, 91 and the reduced diameter section being more than the wall thickness of the tube 10 desired during the production process at said location, so that some radial play remains that allows for possible variations in the wall thickness of the tube during the production process, without the risk that said tube becomes stuck between a ring member 90, 91 and the reduced diameter section of the run-off part of the expansion device.

Each ring member 90, 91 may be provided with cooling means for cooling the ring member 90, 91, e.g. with an internal cooling fluid duct, e.g. an annular duct.

Each ring member 90, 91 preferably is composed of two semi-circular parts, allowing to place the ring members 90, 91 around the tube 10, e.g. during the start-up phase of the production process, and allowing to remove, e.g. for exchange, the ring members during the production process.

Each ring member 90, 91 preferably is made of metal.

As indicated above, in order to freeze the orientation of the plastic material, the oriented tube 10'is cooled externally while passing over the run-off part 20c by the first external cooling device 60.
The external cooling by first external cooling device 60 of the tube while passing over the run-off section 20c is here performed in the absence of internal cooling of the tube 10 while passing over the expansion device 20, and in fact also in the absence of any internal cooling downstream of the expansion device 20.

In order to arrive at a biaxially oriented tube 10 with desired dimensions, as wall thickness and cross-sectional shape, preferably without using an outer diameter calibration downstream of the expansion device 20, it has been found possible to rely on the use of the one or more outer diameter ring members 90, 91 and/or the external cooling of the oriented tube. This is done on the basis of the so-called snap-back effect. This snap-back effect is known in the art and is visible as a reduction of the tube diameter directly downstream of the expansion device 20.

In a preferred embodiment the first external cooling device 60 is adapted to adjust the length and/or location with respect to the expansion device 20 of the stretch of the oriented tube 10 that is affected by the first external cooling device 60. It has been found that by suitable selection of the length, and preferably also the location, of the affected stretch with respect to the expansion device, in particular the run-off part 20c, the snap-back effect can be controlled, and so the diameter of the tube 10. Clearly the intensity of the cooling by device 60 can also be controlled and will have an influence on the snap-back effect.

In a very practical embodiment the first external cooling device 60 operates with one or more nozzles emitting sprays or jets of cooling liquid, e.g. water, and comprises an upstream shield member and a downstream shield member, said shield members delimiting the stretch of oriented tube that is affected by the sprays or jets of cooling liquid. At least one of the shield members, preferably both, is displaceable in axial direction, thereby allowing to adjust the length and/or the location of the stretch of tube that is affected by the cooling liquid. It will be appreciated that by controlling the length and/or position of the shield members, the cooling of the oriented tube can be controlled, even more when - as is common - the intensity of the cooling spray can be controlled as well.

In an even more practical embodiment each of the shield members- as depicted here - is integral with a ring member 90, 91.

A displacement device 65, here embodied as motorized drive assembly, for axial displacement of at least one of the shield members and/or at least one of the ring members 90, 91 in axial direction along the run-off part 20a is provided. In this example the device 65 includes one or more screw spindles 66, e.g. operated by a common electric motor.

As is preferred the ring members 90,91 and shield members, as well as the associated displacement device 65, are mounted on a mobile support 68 allowing to displace said components in axial direction, e.g. to a retracted position downstream of the position of the expansion device 20, e.g. in order to allow access to the expansion device e.g. when replacing the expansion device and/or during start-up of the installation.

As is preferred an external cooling device 70 is arranged at a location that is spaced downstream from the external cooling device 60 and the expansion device 20. The external cooling device 70 preferably comprises one or more nozzles emitting sprays or jets of cooling water onto the exterior of the oriented tube 10'.

Preferably a dry zone is created between the external cooling devices 60 and 70 on the outside of the tube 10'. This is considered to avoid or at least reduce the formation of visual effects, e.g. rings, on the outside of the tube by cooling water.

Preferably the external cooling device 70 comprises an upstream shield member 71 delimiting the upstream end of the stretch of oriented tubing 10 affected by the external cooling device 70. As is preferred the upstream shield member 71 is movable in axial direction by an associated displacement device, or is coupled to an axially mobile ring member 91.

The upstream shield member 71 preferably has an easily flexible annular lip 72 engaging the oriented tube 10 so as to avoid any scratching or deformation of the oriented tube.

Here use is made of a measuring device 130 for measuring at least the outer diameter of the oriented tube 10', and preferably also the wall thickness and/or cross-sectional profile, which measuring device 130 is arranged downstream of the expansion device 20, here downstream of the external cooling device 70.
Also use is made of a control device (not shown), e.g. an electronic device, which is linked to the measuring device in order to obtain input signals that allow to control the external cooling device 60 and/or the external cooling device 70.
For instance the device 60 is controlled with regard to at least the length and/or location with respect to the expansion device of the stretch of oriented tube that is affected by the external cooling device 60, and/or the intensity of the cooling.
For instance the external cooling device 70 is controlled with regard to the axial position of the upstream shield member 71 and/or the intensity of the cooling.
By control of the external cooling of the tube by the cooling device 60 and/or device 70 the snap-back effect can be controlled, and thus the diameter of the finally obtained tube. This can then be done without the need for any further outer diameter calibration downstream of the expansion device.

In order to supply fluid, e.g. water, preferably gas, more preferably air, most preferably heated, to the second fluid volume 22, one or more dedicated supply ducts can be provided having a port in the run-off part exterior surface. As an alternative, or in combination therewith, a communication passage can be made, preferably a valve controlled passage, that communicates with both the first and the second fluid volume 21, 22. Such a passage allows e.g. to equalize the pressure in the two fluid volumes when desired and/or to introduce fluid into one volume via a supply duct having a port at the other volume. While not depicted here, the skilled person will appreciate that the passage could extent between ports in the outer surface of the expansion device, e.g. on at the run-on part and one at the run-off part, with interposition of a valve, e.g. an electrically operated valve, e.g. mounted at the rear end of the expansion device.

The presence of two outer diameter ring members 90, 91 spaced apart from one another is advantageous, even more advantageous when the run-off part 20c is embodied with an increased diameter portion 20c1 delimiting the downstream end of the reduced diameter section. Preferably each ring member 90, 91 being mobile in axial direction relative to the reduced diameter section.

With the ring members 90, 91 both suitably dimensioned as constrictive ring members, the effect can be obtained that the ring member 90 contributes to the sealing engagement of the tube with the expansion device in the region at or near the maximum diameter of the expansion part 20b. This avoids uncontrolled escape or leakage of fluid from the one volume to the other volume.
The ring member 91 contributes to the sealing engagement of the oriented tube with the increased diameter portion 20c1. This avoids or at least limits any leakage of fluid into the lumen of the oriented tube downstream of the expansion device 20, and thus avoids undesirable instability of the fluid volume. Most preferably the downstream ring member 91 is located closely upstream of the increased diameter portion 20c1, thereby enhancing the sealing contact between the tube and the increased diameter portion 20c1.

In an embodiment the installation is provided with both supply means for a liquid fluid to one or both fluid volumes between the expansion device and the tube and supply means for gaseous fluid to one or both fluid volumes, and with an arrangement of ducts and one or more valves allowing to selectively feed fluid to one or both fluid volumes. For instance in a start-up phase fluid is only fed to the first volume 21, e.g. first heated water and later gas, such as air. The ring members 90, 91 may be absent during the start-up phase, facilitating the first passage over the run-off part. Later the ring members 90, 91 are fitted or made operative and a fluid is fed to the second volume 22, e.g. heated air.

The excellent sealing engagement in the region of the maximum diameter of the expansion part, also allows for a reliable operation with the first fluid volume 21 acting as an internal pressurized zone within the tube that causes gradual expansion of the tube to an internal diameter less than the maximum diameter in order to maintain the reliable sealing engagement. The use of an internal pressurized zone to cause gradual expansion in a production process for biaxially oriented thermoplastic tubing is known in the art, e.g. from WO 90/02644. However in the known installations operating according to this approach use is made of an inflatable plug to delimit the downstream end of the pressurized zone, which inflatable plug presses the expanded tube against a surrounding sizing sleeve to obtain a seal that avoids pressure loss in the pressurized zone. This approach has shown to come up with less favourable results, e.g. with regard to uniformity of dimensions of the finally obtained tube and stability of the production process. One aspect is e.g. that the inflatable plug is deformable, and thus does not dictate the obtained orientation in the manner as the non-deformable expansion part.

In the embodiment depicted here the expansion part of the expansion device 20 has a stepped design with a first conical surface increasing in diameter in downstream direction, adjoining a cylindrical surface of a first diameter, followed by a second conical expansion surface increasing in diameter in downstream direction. As is preferred the diameter of the sealing member 30 is greater than the first diameter of the expansion part in this stepped design. The expansion part could have multiple steps.

In an embodiment one or more rollers 125 are arranged below tube 10 so as to support said tube, e.g. below the run-off part of the expansion device or, with preference, downstream of the expansion device e.g. to avoid interference with any of the rings 90, 91, e.g. during start-up.

In a practical embodiment an upstream replaceable ring is fitted at the transition between the expansion part 20b and the run-off part 20c of the expansion device, the replaceable ring forming the maximum diameter of the expansion part 20b. This allows for relatively easy change of the maximum diameter of the expansion device as well as replacement of ring in case of wear.

In this practical embodiment the increased diameter portion 20c1 is formed by a downstream replaceable ring which is fitted at the downstream end of the run-off section, the replaceable ring having a diameter greater than the upstream portion of the run-off part of the expansion device. This allows for relatively easy change of the diameter of the expansion device at said downstream location as well as replacement of said zone in case of wear.

## Claims

1. A method for producing a biaxially oriented tube from thermoplastic material, wherein a tube (10) in preform condition having a wall, an inner face, and an outer face is extruded from thermoplastic material using an extruder (1) which is provided with an extruder die head (3) having an inner die member (5), the inner die member forming a lumen in the tube in preform condition, wherein the tube in preform condition is subjected to a temperature conditioning by means of tempering devices, so that a tempered tube in preform condition is obtained having an orientation temperature within a target orientation temperature range which is suitable for the thermoplastic material, and wherein use is made of an expansion device (20) in the lumen of the tube downstream of the extruder, said expansion device comprising:
- an upstream sealing portion (30),
- a downstream sealing portion (20b),
- one or more fluid supply ducts (27a,b), said one or more fluid supply ducts having one or more ports in an outer surface of the expansion device between said upstream and downstream sealing portions;
and wherein use is made of a fluid supply device that supplies pressurized fluid, preferably gas, to said one or more fluid supply ducts so that a fluid volume (21) is established between the tempered tube and the expansion device, said fluid volume being delimited at its upstream end by said upstream sealing portion (30) and at its downstream end by said downstream sealing portion (20b), wherein said fluid volume filled causes gradual expansion of the tube due to internal fluid pressure before the tube comes into contact with the downstream sealing portion of the expansion device,
wherein said tempering devices comprise a first external cooling device (8) which is arranged downstream of the extruder (1) and the die head (3) and which externally cools the tube in preform condition,
wherein, preferably, an upstream drawing device (15) is arranged downstream of said first external cooling device (8), said upstream drawing device comprising friction elements, e.g. multiple tracks, that engage on the outer face of the tube in preform condition, the speed of the friction elements being controlled by a drive system,
wherein said first external cooling (8) device cools the tube in preform condition so as to obtain a temperature profile across the wall of the tube with an outer layer at a low temperature, preferably to a temperature at which said layer is able to withstand engagement thereof by said friction elements when present,
wherein said tempering devices further comprise a heat exchange device (16) and a conditioning device (18) that are arranged in series downstream of the first external cooling device, preferably downstream of the upstream drawing device (15) when present, and ahead of the upstream sealing portion (30),
wherein the outer face of said tube in preform condition is exposed by said conditioning device (18) in one or more successive sections of said conditioning device to a conditioning temperature that is - in each section - uniform in circumferential direction of tube so that said conditioning device causes the temperature profile across the wall of the tube in preform condition to even out to a temperature profile within said target orientation temperature range ahead of the location where the expansion of the tube by fluid pressure takes place,
wherein a downstream drawing device (50) is arranged downstream of the expansion device (20) and acts on the tube (10), in such a manner that said tube is transformed from a tube in preform condition into a biaxially oriented tube with thermoplastic material which is oriented in axial direction and in circumferential direction of the tube,
and wherein one or more downstream cooling devices (60,70,80) cool the biaxially oriented tube,
**characterized in that**
the section of the condition device (18) is embodied as a hot air chamber or oven wherein air is circulated at constant air temperature to which circulating air the outer face of the tube in preform condition is exposed,
and **In that**
use is made a temperature sensing system with one or more temperature sensors (40a, b; 41 a,b) which measure the temperature of the tube in preform condition at multiple positions in circumferential direction of the tube at one or more locations downstream of the conditioning device (18) and ahead of the gradual expansion of the tube by said fluid volume (21),
and that
said heat exchange device (16,16a) - that is arranged downstream of the first external cooling device, preferably downstream of the upstream drawing device (15) when present, and upstream of the conditioning device (18) - is a sectorwise controllable heat exchange device which is adapted and operated to exchange heat with the tube in preform condition in a sectorwise controllable manner, wherein the tube is considered divided in multiple imaginary sectors around its circumference and the sectorwise controllable heat exchange device is adapted and operated to adjust the heat exchange with each sector of the tube independent from the heat exchange with said one or more other sections,
and **In that**
said sectorwise controllable heat exchange device (16) is controlled (17) on the basis of a comparison between the temperatures that are measured by the temperature sensing system on the one hand and said target orientation temperature range on the other hand.

2. Method according to claim 1, wherein the temperature sensing system comprises one or more internal temperature sensors (40a,b) that measure the temperature of the inner face of the tube in preform condition upstream of or at the upstream sealing portion (30) of the expansion device, and/or comprises one or more external temperature sensors (41a,b) that measure the temperature of the outer face of the tube in preform condition upstream of or at the upstream sealing portion (30) of the expansion device (20),
and wherein said temperatures measured by said internal and/or external temperature sensors are used to establish an actual temperature profile across the wall of the tube (10) In preform condition,
and wherein said sectorwise controllable heat exchange device is controlled on the basis of a comparison between the actual temperature profile across the wall of the tube in preform condition on the one hand and a target orientation temperature profile across the wall of the tube on the other hand.

3. Method according to one or more of the preceding claims, wherein the dwell time of the tube in preform condition within the conditioning device (18) is significantly longer than in the preceding heat exchange device (16), preferably at least 5 times longer, e.g. between 5 and 30 times longer.

4. Method according to one or more of the preceding claims, wherein the die head (3) is provided with means for controlling and adjusting the annular passage in order to control the wall thickness and/or cross-sectional shape of the tube in preform condition emerging from the die head, and wherein a measuring device (6) is arranged directly downstream of the die head and measures the emerging tube in preform condition to provide control signals for the annular passage of the die head.

5. Method according to one or more of the preceding claims, wherein the plastic material is PVC and wherein the first external cooling device (8) cools the tube to a temperature of the outer layer of about 55 - 70°C, preferably such that the heat mass within the wall of the tube is between 85 - 110% of the heat mass of the tube when within the target orientation temperature range.

6. Method according to one or more of the preceding claims, wherein the sectorwise controllable heat exchange device (16) comprises multiple independently controllable heat exchange units (16a) that are disposed at circumferentially spaced locations around the tube, e.g. infrared heating units.

7. Method according to one or more of the preceding claims, wherein use is made of an expansion device (20) with a non-deformable expansion part (20b) having a gradually increasing diameter to a maximum diameter at a downstream end thereof, which expansion part is contacted by the tube that has been gradually expanded by said fluid volume (21) and so acts as downstream sealing portion of the fluid volume, which expansion part (20b) exerts an expanding force on the tube so as to bring about a further expansion of the tube.

8. Method according to claim 7, wherein use is made of an expansion device (20) with a run-on part (20a) that is provided with a sealing member (30) that is sealingly engaged by the tube in preform condition, said sealing member (30) being arranged at a distance upstream of the expansion part (20b) and having a diameter that is greater than the run-on part downstream of the sealing member, the sealing member (30) forming an effective seal that prevents the fluid in the fluid volume (21) from reaching the lumen of the tube upstream of the sealing member.

9. Method according to claim 7, wherein use is made of an expansion device having a run-off part (20c) downstream of the expansion part (20b), and wherein a second fluid volume (22) is established between the run-off part (20c) of the expansion device and the oriented tube, preferably between a reduced diameter section of the run-off part and the oriented tube, and wherein preferably the fluid supplied to said second fluid volume is a pressurized gas, e.g. air.

10. Method according to claim 9, wherein the run-off part (20c) has a reduced diameter section having a smaller diameter than the maximum diameter of the expansion part,
and wherein at least one outer diameter ring member (90,91) is arranged around said reduced diameter section,
and wherein the outer diameter ring member (90,91) is arranged such that the oriented tube passes through the ring member while being in contact with said ring member, the outer diameter ring member and the reduced diameter section being dimensioned such that seizing of the oriented tube between the run-off part and the at least one outer diameter ring member is avoided, preferably the inside of the oriented tube being radially spaced from the reduced diameter section, the expansion device having one or more fluid supply ducts having one or more ports in the reduced diameter section, a gas being supplied between said reduced diameter section and the oriented tube to establish the second fluid volume (22),
and wherein use is made of an external cooling device (60) that is adapted and operated to cool the oriented tube externally while passing over the run-off part (20c).

11. Installation for producing a biaxially oriented tube from thermoplastic material, which installation comprises an extruder (1) which is provided with an extruder die head (3) having an inner die member (5), wherein a tube (10) in preform condition having a wall, an inner face, and an outer face is extruded from thermoplastic material, and wherein the inner die member forms a lumen in the tube in preform condition,
wherein the installation comprises tempering devices that are adapted to subject the tube in preform condition to a temperature conditioning, so that a tempered tube in preform condition is obtained having an orientation temperature within a target orientation temperature range which is suitable for the thermoplastic material,
and wherein the installation comprises an expansion device (20) in the lumen of the tube downstream of the extruder, said expansion device comprising:
- an upstream sealing portion (30),
- a downstream sealing portion (20b),
- one or more fluid supply ducts (27a,b), said one or more fluid supply ducts having one or more ports in an outer surface of the expansion device between said upstream and downstream sealing portions;
and wherein the installation comprises a fluid supply device (55) that is adapted to supply pressurized fluid, preferably gas, to said one or more fluid supply ducts so that a fluid volume (21) is established between the tempered tube and the expansion device, said fluid volume being delimited at its upstream end by said upstream sealing portion and at its downstream end by said downstream sealing portion, wherein said fluid volume filled causes gradual expansion of the tube due to internal fluid pressure before the tube comes into contact with the downstream sealing portion of the expansion device,
wherein said tempering devices comprise a first external cooling device (8) which is arranged downstream of the extruder and the die head and which is adapted to externally cool the tube in preform condition,
wherein, preferably, an upstream drawing device (15) is arranged downstream of said first external cooling device (8), said upstream drawing device (15) comprising friction elements, e.g. multiple tracks, that are adapted to engage on the outer face of the tube in preform condition, the speed of the friction elements being controlled by a drive system,
wherein said first external cooling device is adapted to cool the tube (10) in preform condition so as to obtain a temperature profile across the wall of the tube with an outer layer at a low temperature, preferably a temperature at which said layer is able to withstand engagement thereof by said friction elements when present,
wherein said tempering devices further comprise a heat exchange device (16) and a conditioning device (18) that are arranged in series downstream of the first external cooling device, preferably downstream of the upstream drawing device (15) when present, and ahead of the upstream sealing portion (30),
wherein said conditioning device (18) is adapted to expose the outer face of_the tube in preform in one or more successive sections of said conditioning device to a conditioning temperature that is - in each section - uniform in circumferential direction of tube so that said conditioning device causes the temperature profile across the wall of the tube in preform condition to even out to a temperature profile within said target orientation temperature range ahead of the location where the expansion of the tube by fluid pressure takes place, wherein a downstream drawing device (50) is arranged downstream of the expansion device and is adapted to act on the tube, in such a manner that said tube is transformed from a tube in preform condition into a biaxially oriented tube with thermoplastic material which is oriented in axial direction and in circumferential direction of the tube,
and wherein one or more downstream cooling devices (60,70,80) are provided to cool the biaxially oriented tube,
**characterized In that**
the section of the condition device (18) is embodied as a hot air chamber or oven wherein air is circulated at constant air temperature to which circulating air the outer face of the tube in preform condition is exposed,
and **in that**
the installation comprises a temperature sensing system with one or more temperature sensors (40a,b;41a,b) which are adapted to measure the temperature of the tube in preform condition at multiple positions in circumferential direction of the tube at one or more locations downstream of the conditioning device (18), and ahead of the gradual expansion of the tube by said fluid volume (21),
and that
said heat exchange device (16) - that is arranged downstream of the first external cooling device, preferably downstream of the upstream drawing device (15), and upstream of the conditioning device (18) - is a sectorwise controllable heat exchange device which is adapted to exchange heat with the tube in preform condition in a sectorwise controllable manner, wherein the tube is considered divided in multiple imaginary sectors around its circumference and the sectorwise controllable heat exchange device is adapted to adjust the heat exchange with each sector of the tube independent from the heat exchange with said one or more other sections,
and **in that**
said sectorwise controllable heat exchange device (16) is adapted to be controlled on the basis of a comparison between the temperatures that are measured by the temperature sensing system on the one hand and said target orientation temperature range on the other hand.

12. Installation according to claim 11, wherein the temperature sensing system comprises one or more internal temperature sensors (40a,b) that measure the temperature of the inner face of the tube in preform condition upstream of or at the upstream sealing portion (30) of the expansion device, and comprises one or more external temperature sensors (41 a,b) that measure the temperature of the outer face of the tube in preform condition upstream of or at the upstream sealing portion (30) of the expansion device (20),
and wherein the system is adapted to establish an actual temperature profile across the wall of the tube (10) in preform condition on the basis of said temperatures measured by said internal and external temperature sensors, and wherein the system is adapted to control said sectorwise controllable heat exchange device on the basis of a comparison between the actual temperature profile across the wall of the tube in preform condition on the one hand and a target orientation temperature profile across the wall of the tube on the other hand.

13. Installation according to one or more of the preceding claims 11-12, wherein the conditioning device (18) is significant longer than the preceding heat exchange device (16), preferably at least 5 times longer, e.g. between 5 and 30 times longer.

14. Installation according to one or more of the preceding claims 11 - 13, wherein the expansion device (20) has a non-deformable expansion part (20b) having a gradually increasing diameter to a maximum diameter at a downstream end thereof, which expansion part is contacted by the tube that has been gradually expanded by said fluid volume (21) and so acts as downstream sealing portion of the fluid volume, which expansion part (20b) is adapted to exert an expanding force on the tube so as to bring about a further expansion of the tube.

15. Installation according to one or more of the preceding claims 11 -14, wherein the expansion device (20) has a run-on part (20a) that is provided with a sealing member (30) that is sealingly engaged by the tube in preform condition, said sealing member (30) being arranged at a distance upstream of the expansion part (20b) and having a diameter that is greater than the run-on part downstream of the sealing member, the sealing member (30) being adapted to form an effective seal that prevents the fluid in the fluid volume (21) from reaching the lumen of the tube upstream of the sealing member.

## Patentansprüche

1. Verfahren zum Herstellen eines biaxial orientiertes Rohrs aus thermoplastischem Material, in welchem ein Rohr (10) in einem Vorformzustand mit einer Wand, einer Innenfläche und einer Außenfläche aus thermoplastischem Material extrudiert wird, und zwar unter Verwendung eines Extruders (1), welcher versehen ist mit einem Extruder-Düsenkopf (3), mit einem inneren Düsenelement (5), wobei das innere Düsenelement ein Lumen im Rohr im Vorformzustand bildet, wobei das Rohr im Vorformzustand mittels Vergütungseinrichtungen einer Temperatur-Konditionierung ausgesetzt wird, so dass ein vergütetes Rohr im Vorformzustand mit einer Orientieningstemperatur innerhalb eines Orientieningstemperaturbereichs erhalten wird, welcher für das thermoplastische Material geeignet ist, und in welchem eine Expansionseinrichtung (20) in dem Lumen des Rohrs stromabwärts des Extruders verwendet wird, wobei die Expansionseinrichtung umfasst:
- einem stromaufwärts liegenden Dichtungsabschnitt (30),
- einem stromabwärts liegenden Dichtungsabschnitt (20b),
- ein oder mehrerer Fluid-Zuführkanäle (27a, b), wobei die ein oder mehreren Fluid-Zuführkanäle zwischen den stromaufwärts- und stromabwärts liegenden Abschnitten ein oder mehrere Anschlüsse in einer Außenfläche der Expansionseinrichtung aufweisen;
und in welchem eine Fluid-Zuführeinrichtung verwendet wird, welche ein Druck-fluid, vorzugsweise Gas, den ein oder mehreren Fluid-Zuführkanälen zuführt, so dass ein Fluidvolumen (21) zwischen dem vergüteten Rohr und der Expansionseinrichtung gebildet wird, wobei das Fluidvolumen an seinem stromaufwärts liegenden Ende durch den stromaufwärts liegenden Dichtungsabschnitt (30) und an seinem stromabwärts liegenden Ende durch den stromabwärts liegenden Dichtungsabschnitt (20b) begrenzt ist, wobei das gefüllte Fluidvolumen eine allmähliche Expansion des Rohrs aufgrund des Innen-Fluiddrucks erzeugt, bevor das Rohr in Kontakt mit dem stromabwärts liegenden Dichtungsabschnitt der Expansionseinrichtung kommt,
in welchem die Vergütungseinrichtungen eine erste äußerliche Kühleinrichtung (8) umfassen, welche stromabwärts des Extruders (1) und des Düsenkopfs (3) angeordnet ist und welche das Rohr im Vorformzustand äußerlich kühlt,
in welchem vorzugsweise eine stromaufwärts liegende Zieheinrichtung (15) stromabwärts der ersten äußerlichen Kühleinrichtung (8) angeordnet ist, wobei die stromaufwärts liegende Zieheinrichtung Reibungselemente umfasst, zum Beispiel mehrere Raupen, die an die Außenfläche des Rohrs im Vorformzustand angreifen, wobei die Geschwindigkeit der Reibungselemente durch ein Antriebssystem gesteuert wird,
in welchem die erste äußerliche Kühleinrichtung (8) das Rohr im Vorformzustand kühlt, um so ein Temperaturprofil über die Wand des Rohrs zu erhalten, bei dem sich eine Außenschicht auf einer niedrigen Temperatur befindet, vorzugsweise einer Temperatur bei welcher die Schicht in der Lage ist einer Beruhrung derselben durch die Reibungselemente, falls vorhanden, standzuhalten,
in welchem die Vergütungseinrichtungen ferner eine Wärmetauscheinrichtung (16) und eine Konditionierungseinrichtung (18) umfassen, die in Reihe stromabwärts der ersten äußerlichen Kühleinrichtung angeordnet sind, vorzugsweise stromabwärts der stromaufwärts liegenden Zieheinrichtung (15), falls vorhanden, und vor dem stromaufwärts liegenden Dichtungsabschnitt (30),
wobei die Außenfläche des Rohrs im Vorformzustand durch die Konditioniemngseinrichtung (18) in ein oder mehreren aufeinander folgenden Abschnitten der Konditioniemngseinrichtung einer Konditionierungstemperatur ausgesetzt wird, die -in jedem Abschnitt- in Umfangsrichtung des Rohrs gleichförmig ist, so dass die Konditionierungseinrichtung das Temperaturprofil über die Wand des Rohrs im Vorformzustand vor der Stelle, an welcher die Expansion des Rohrs durch den Fluiddruck stattfindet auf ein Temperaturprofil innerhalb des Sollorientienings-Temperaturbereichs angleicht,
in welchem eine stromabwärts liegende Zieheinrichtung (50) stromabwärts der Expansionseinrichtung (20) angeordnet ist und auf das Rohr (10) in einer solchen Weise wirkt, dass das Rohr von einem Rohr im Vorformzustand in ein biaxial orientiertes Rohr mit thermoplastischem Material umgeformt wird, welches in axialer Richtung und in Umfangsrichtung des Rohrs orientiert ist,
und in welchem ein oder mehrere stromabwärts liegende Kühleinrichtungen (60, 70, 80) das biaxial orientierte Rohr kühlen,
**dadurch gekennzeichnet, dass**
der Abschnitt der Konditionierungseinrichtung (18) als eine Heißluftkammer oder ein Ofen ausgebildet ist, in welchem Luft bei einer konstanten Lufttemperatur zirkuliert wird, wobei die Außenfläche des Rohrs im Vorformzustand dieser zirkulierenden Luft ausgesetzt wird,
und dadurch, dass
ein Temperatur-Erfassungssystem mit ein oder mehreren Temperatursensoren (40a, b; 41a, b) verwendet wird, welches die Temperatur des Rohrs im Vorformzustand an mehreren Positionen in Umfangsrichtung des Rohrs an ein oder mehreren Stellen stromabwärts der Konditionierungseinrichtung (18) und vor der allmählichen Expansion des Rohrs durch das Fluidvolumen (21) misst,
und dass
die Wärmetauscheinrichtung (16, 16a) - die stromabwärts der ersten äußeren Kühleinrichtung angeordnet ist, vorzugsweise stromabwärts der stromaufwärts liegenden Zieheinrichtung (15), falls vorhanden, und stromaufwärts der Konditionierungseinrichtung (18) - eine sektorweise steuerbare Wärmetauscheinrichtung ist, welche so ausgebildet ist und betätigt wird, dass Wärme mit dem Rohr im Vorformzustand in einer sektorweise steuerbaren Weise ausgetauscht wird, wobei das Rohr als in mehrere imaginäre Sektoren um seine Umfangsrichtung herum unterteilt angesehen wird und die sektorweise steuerbare Wärmetauscheinrichtung so ausgebildet und betätigt wird, dass der Wärmeaustausch mit jedem Sektor des Rohrs unabhängig von dem Wärmetausch mit den ein oder mehreren anderen Sektoren eingestellt werden kann,
und dadurch, dass
die sektorweise steuerbare Wärmetauscheinrichtung (16) gesteuert (17) wird auf der Basis eines Vergleichs zwischen den Temperaturen, die einerseits durch das Temperatur-Erfassungssystem gemessen werden, und andererseits dem Sollorientiertings-Temperaturbereich.

2. Verfahren nach Anspruch 1, in welchem das Temperatur-Erfassungssystem ein oder mehrere interne Temperatursensoren (40a, b) umfasst, die die Temperatur der Innenfläche des Rohrs im Vorformzustand stromaufwärts des oder am stromaufwärts liegenden Dichtungsabschnitt (30) der Expansionseinrichtung messen, und/oder ein oder mehrere externe Temperatursensoren (41 a, b) umfasst, welche die Temperatur an der Außenfläche des Rohrs im Vorformzustand stromaufwärts des oder am stromaufwärts liegenden Dichtungsabschnitt (30) der Expansionseinrichtung (20) messen,
und in welchem die durch die internen und/oder externen Temperatursensoren gemessenen Temperaturen dazu verwendet werden, ein tatsächliches Temperaturprofil über die Wand des Rohrs (10) im Vorformzustand zu erstellen,
und in welchem die abschnittsweise steuerbare Wärmetauscheinrichtung auf der Basis eines Vergleichs zwischen dem tatsächlichen Temperaturprofil über die Wand des Rohrs im Vorformzustand einerseits und ein Sollorientierungs-Temperaturprofil über die Wand des Rohrs andererseits gesteuert wird.

3. Verfahren nach ein oder mehreren der vorhergehenden Ansprüche, in welchem die Verweildauer des Rohrs im Vorformzustand innerhalt der Konditioniereinrichtung (18) signifikant länger ist als in der vorhergehenden Wärmetauscheinrichtung (16), vorzugsweise wenigstens 5 mal länger, zum Beispiel zwischen 5 und 30 mal länger.

4. Verfahren nach ein oder mehreren der vorhergehenden Ansprüche, in welchem der Düsenkopf (3) mit Mitteln zum Steuern und Einstellen des Ringdurchgangs versehen ist, um die Wanddicke und/oder die Querschnittsform des vom Düsentopf abgegebenen Rohrs im Vorformzustand zu steuern, und in welchem eine Messeinrichtung (6) direkt stromabwärts des Düsenkopfs angeordnet ist und das abgegebene Rohr im Vorformzustand misst, um Steuersignale für den Ringdurchgang des Düsenkopfs bereitzustellen.

5. Verfahren nach ein oder mehreren der vorhergehenden Ansprüche, in welchem das Kunststoffmaterial ein PVC ist und in welchem die erste externe Kühleinrichtung (8) das Rohr auf eine Temperatur der Außenschicht von etwa 55 - 70°C kühlt, vorzugsweise derart, dass die Wärmemenge innerhalb der Wand des Rohrs zwischen 85 - 110% der Wärmemenge des Rohrs beträgt, wenn sich dieses innerhalb des Sollorientiemngs-Temperaturbereichs befindet.

6. Verfahren nach ein oder mehreren der vorhergehenden Ansprüche, in welchem die sektorweise steuerbare Wärmetauscheinrichtung (16) mehrere unabhängig steuerbare Wärmeaustauscheinheiten (16a) umfasst, die an umfänglich in Abstand zueinander liegenden Stellen um das Rohr herum angeordnet sind, zum Beispiel Infrarot-Heizeinheiten.

7. Verfahren nach ein oder mehreren der vorhergehenden Ansprüche, in welchem eine Expansionseinrichtung (20) mit einem nicht verformbaren Expansionsteil (20b) mit einem bis zu einem maximalen Durchmesser an einem stromabwärts liegenden Ende derselben allmählich zunehmenden Durchmesser verwendet wird, wobei dieser Expansionsteil von dem Rohr berührt wird, das allmählich durch das Fluidvolumen (21) expandiert wird und so als der stromabwärts liegende Dichtungsabschnitts des Fluidvolumen wirkt, wobei der Expansionsteil (20b) eine Expansionskraft auf das Rohr ausübt, um so eine weitere Expansion des Rohrs herbeizuführen.

8. Verfahren nach Anspruch 7, in welchem eine Expansionseinrichtung (20) mit einem Einlaufteil (20a) verwendet wird, das mit einem Dichtungselement (30) versehen ist, das dichtend mit dem Rohr im Vorformzustand in Eingriff steht, wobei das Dichtungselement (30) in einem Abstand stromaufwärts des Expansionsteils (20b) angeordnet ist und einen Durchmesser hat, der größer ist als das Einlaufteil stromabwärts des Dichtungselements, wobei das Dichtungselement (30) eine wirksame Dichtung bildet, welche das Fluid in dem Fluidvolumen (21) daran hindert, dass das Lumen des Rohrs stromaufwärts des Dichtungselements zu erreichen.

9. Verfahren nach Anspruch 7, in welchem eine Expansionseinrichtung mit einem Auslaufteil (20c) stromabwärts des Expansionsteils (20b) verwendet wird, in welchem ein zweites Fluidvolumen (22) zwischen dem Auslaufteil (20c) der Expansionseinrichtung und dem ausgerichtetem Rohr gebildet wird, vorzugsweise zwischen einer reduzierten Durchmesserweite des Auslaufteils und dem orientiertem Rohr, und in welchem vorzugsweise das dem zweiten Fluidvolumen zugeführte Fluid ein Druckgas ist, zum Beispiel Luft.

10. Verfahren nach Anspruch 9, in welchem das Auslaufteil (20c) eine reduzierte Durchmesserweite mit einem kleineren Durchmesser als dem maximalen Durchmesser des Expansionsteils hat,
und in welchem wenigstens ein Außendurchmesser-Ringelement (90, 91) um die reduzierte Durchmesserweite herum angeordnet wird,
und in welchem das Außendurchmesser-Ringelement (90, 91) derart angeordnet wird, dass sich das ausgerichtete Rohr durch das Ringelement hindurch bewegt, während es sich in Kontakt mit dem Ringelement befindet, wobei das Außendurchmesser-Ringelement und die reduzierte Durchmesserweite derart bemessen sind, dass eine Berührung des orientierten Rohrs zwischen dem Auslaufteil und dem wenigstens einen Außendurchmesser-Ringelement vermieden wird, wobei vorzugsweise die Innenseite des ausgerichteten Rohrs von der reduzierten Durchmesserweite radial in Abstand liegt, wobei die Expansionseinrichtung ein oder mehrere Fluidzuführkanäle aufweist, die ein oder mehrere Anschlüsse in der reduzierten Durchmesserweite haben, wobei ein Gas zwischen die reduzierte Durchmesserweite und das ausgerichtete Rohr geleitet wird, um das zweite Fluidvolumen (22) herzustellen,
und in welchem eine äußere Kühleinrichtung (60) verwendet wird, die so ausgebildet und betrieben wird, dass das ausgerichtete Rohr äußerlich gekühlt wird, während es sich über das Auslaufteil (20c) hinweg bewegt.

11. Anlage zum Herstellen eines biaxial orientierten Rohrs aus thermoplastischem Material, wobei die Anlage umfasst einen Extruder (1), welcher mit einem Exdruder-Düsenkopf (3) versehen ist, der ein inneres Düsenelement (5) umfasst, in welcher ein Rohr (10) im Vorformzustand mit einer Wand, einer Innenfläche und einer Außenfläche aus thermoplastischem Material extrudiert wird, und in welcher das innere Düsenelement ein Lumen in dem Rohr im Vorformzustand bildet,
und wobei die Anlage Vergütungseinrichtungen umfasst, die so ausgebildet sind, dass diese das Rohr im Vorformzustand einer Temperaturkonditioniening aussetzen, so dass ein vergütetes Rohr im Vorformzustand erhalten wird, dass eine Orientieningstemperatur innerhalb eines Soll-Orientieningstemperaturbereichs hat, welche für das thermoplastische Material geeignet ist,
und wobei die Anlage eine Expansionseinrichtung (20) in dem Lumen des Rohrs stromabwärts des Extruders umfasst, wobei die Expansionseinrichtung aufweist:
- einen stromaufwärts liegenden Dichtungsabschnitt (30),
- einen stromabwärts liegenden Dichtungsabschnitt (20b),
- ein oder mehrere Fluidzuführkanäle (27a, b), wobei ein oder mehrere der Fluidzuführkanäle ein oder mehrere Anschlüsse in einer Außenfläche der Expansionseinrichtung zwischen dem stromaufwärts liegenden und dem stromabwärts liegenden Dichtungsabschnitt hat;
und wobei die Anlage eine Fluidzuführeinrichtung (55) umfasst, die so ausgebildet ist, dass diese ein Druckfluid, vorzugsweise Gas, den ein oder mehreren Fluid-Zuführkanälen zuführt, so dass ein Fluidvolumen (21) zwischen dem vergütetem Rohr und der Expansionseinrichtung erzeugt wird, wobei das Fluidvolumen an seinem stromaufwärts liegenden Ende durch den stromaufwärts liegenden Dichtungsabschnitt und an seinem stromabwärts liegenden Ende durch den stromabwärts liegenden Dichtungsabschnitt begrenzt ist, wobei das gefüllte Fluidvolumen aufgrund eines inneren Fluiddrucks eine allmähliche Ausdehnung des Rohrs erzeugt, bevor das Rohr in Kontakt mit dem stromabwärts liegenden Dichtungsabschnitt der Expansionseinrichtung gelangt,
in welcher die Vergütungseinrichtungen eine erste äußerliche Kühleinrichtung (8) umfassen, welche stromabwärts des Extruders und des Düsenkopfes angeordnet ist und welche so ausgebildet ist, dass diese das Rohr im Vorformzustand äußerlich kühlt,
in welcher vorzugsweise eine stromaufwärts liegende Dichtungseinrichtung (15) stromabwärts der ersten äußerlichen Kühleinrichtung (8) angeordnet ist, wobei eine stromaufwärts liegende Zieheinrichtung (15) Reibungselemente umfasst, zum Beispiel mehrere Raupen, die so ausgebildet sind, dass diese an die Außenfläche der Rohrs im Vorformzustand angreifen, wobei die Geschwindigkeit der Reibungselemente durch ein Antriebssystem gesteuert wird,
in welcher die erste äußere Kühleinrichtung so ausgebildet ist, dass diese das Rohr (10) im Vorformzustand kühlt, um so ein Temperaturprofil über die Wand des Rohrs zu erhalten, bei dem sich eine äußere Schicht auf einer niedrigeren Temperatur befindet, vorzugsweise einer Temperatur, bei welcher die Schicht in der Lage ist, einem Angriff durch die Reibungselemente, wenn diese vorhanden sind, standzuhalten,
in welcher die Vergütungseinrichtungen ferner eine Wärmetauscheinrichtung (16) und eine Konditioniereinrichtung (18) umfassen, die in Reihe stromabwärts der ersten äußerlichen Kühleinrichtung angeordnet sind, vorzugsweise stromabwärts der stromaufwärts liegenden Zieheinrichtung (15), wenn diese vorhanden ist, und vor dem stromaufwärts liegenden Dichtungsabschnitt (30),
in welcher die Konditioniereinrichtung (18) so ausgebildet ist, dass diese die Außenfläche des Rohrs im Vorformzustand in ein oder mehreren aufeinanderfolgenden Abschnitten der Konditioniereinrichtung einer konditionierten Temperatur aussetzt, die - in jede Abschnitt - in Umfangsrichtung des Rohrs gleichförmig ist, so dass die Konditioniereinrichtung das Temperaturprofil über die Wand des Rohrs im Vorformzustand dazu veranlasst, sich vor der Stelle einem Temperaturprofil innerhalb des Soll-Orientieningstemperaturbereichs anzupassen, an welcher die Expansion des Rohrs durch den Fluiddruck stattfindet,
wobei die stromabwärts liegende Zieheinrichtung (50) stromabwärts der Expansionseinrichtung angeordnet ist und so ausgebildet ist, dass diese auf das Rohr wirkt, derart, dass das Rohr von einem Rohr im Vorformzustand in ein biaxial orientiertes Rohr mit thermoplastischem Material umgeformt wird, welches in axialer Richtung und in Umfangsrichtung des Rohrs orientiert ist,
und in welcher ein oder mehrere stromabwärts liegende Kühleinrichtungen (60, 70, 80) vorgesehen sind, um das biaxial orientierte Rohr zu kühlen,
**dadurch gekennzeichnet, dass**
der Abschnitt der Konditioniereinrichtung (18) als eine Heißluftkammer oder ein Ofen ausgebildet ist, in welchem Luft bei einer konstanten Lufttemperatur zirkuliert wird, wobei die Außenfläche des Rohrs im Vorform-Zustand dieser zirkulierender Luft ausgesetzt ist,
und dadurch, dass
die Anlage ein Temperatur-Erfassungssystem mit ein oder mehreren Temperatursensoren (40a, b; 41a, b) umfasst, welche so ausgebildet sind, dass diese die Temperatur des Rohrs im Vorformzustand an mehreren Positionen in Umfangsrichtung des Rohrs an ein oder mehreren Stellen stromabwärts der Konditioniereinrichtung (18) und vor der allmählichen Expansion des Rohrs durch das Fluidvolumen (21) messen,
und dass
die Wärmetauscheinrichtung (16) - die stromabwärts der ersten äußeren Kühleinrichtung angeordnet ist, vorzugsweise stromabwärts der stromaufwärts liegenden Zieheinrichtung (15) und stromaufwärts der Konditioniereinrichtung (18) - eine sektorweise steuerbare Wärmetauscheinrichtung ist, welche so ausgebildet ist, dass diese Wärme mit dem Rohr im Vorformzustand in einer sektorweisen steuerbaren Weise austauscht, wobei das Rohr als um seinen Umfang herum unterteilte mehrere imaginäre Sektoren angesehen wird und die sektorweise steuerbare Wärmetauscheinrichtung so ausgebildet ist, den Wärmeaustausch mit jedem Sektor des Rohrs unabhängig von dem Wärmeaustausch mit ein oder mehreren anderen Abschnitten einzustellen,
und dadurch, dass
die sektorweise steuerbare Wärmemaustauscheinrichtung so ausgebildet ist, dass diese auf der Basis eines Vergleichs gesteuert wird zwischen den Temperaturen, die einerseits durch das Temperatur-Erfassungssystem gemessen werden, und andererseits dem Soll-Orientieningstemperaturbereich.

12. Anlage nach Anspruch 11, in welcher das Temperatur-Erfassungssystem ein oder mehrere innere Temperatursensoren (40a, b) umfasst, welche die Temperatur der Innenfläche des Rohrs im Vorformzustand stromaufwärts des oder an dem stromaufwärts liegenden Dichtungsabschnitt (30) der Expansionseinrichtung messen, und ein oder mehrere äußere Temperatursensoren (41 a, b) umfasst, welche die Temperatur der Außenfläche des Rohrs im Vorformzustand stromaufwärts des oder an dem stromaufwärts liegenden Dichtungsabschnitt (30) der Expansionseinrichtung (20) messen,
und in welcher das System so ausgebildet ist, dass ein aktuelles Temperaturprofil über die Wand des Rohrs (10) im Vorformzustand auf der Basis der Temperaturen erzeugt wird, die durch die innere und äußere Temperatursensoren gemessen werden, und wobei das System so ausgebildet ist, dass die sektorweise steuerbare Wärmetauscheinrichtung auf der Basis eines Vergleichs zwischen dem aktuellen Temperaturprofil über die Wand des Rohrs im Vorformzustand einerseits und einem Soll-Orientieningstemperaturprofil über die Wand des Rohrs andererseits gesteuert wird.

13. Anlage nach ein oder mehreren der vorhergehenden Ansprüche 11 bis 12, in welcher die Konditioniereinrichtung (18) signifikant länger ist als die vorhergehende Wärmetauscheinrichtung (16), vorzugsweise wenigstens 5 mal länger, zum Beispiel zwischen 5 und 30 mal länger.

14. Anlage nach ein oder mehreren der vorhergehenden Ansprüche 11 - 13, in welcher die Expansionseinrichtung (20) einen nicht verformbaren Expansionsteil (20b) mit einem allmählich bis zu einem maximalen Durchmesser an einem stromabwärts liegenden Ende desselben zunehmenden Durchmesser, wobei das Expansionsteil von dem Rohr berührt wird, das allmählich durch das Fluidvolumen (21) expandiert worden ist und so als stromabwärts liegender Dichtungsabschnitt des Fluidvolumens wirkt, wobei das Expansionsteil (20b) so ausgebildet ist, dass dieses eine Expansionskraft auf das Rohr ausübt, um so eine weitere Expansion des Rohrs herbeizuführen.

15. Anlage nach ein oder mehreren der vorhergehenden Ansprüche 11- 14, in welcher die Expansionseinrichtung (20) einen Einlaufteil (20a) hat, der mit einem Dichtungselement (30) versehen ist, dass dichtend an das Rohr im Vorformzustand angreift, wobei das Dichtungselement (30) in einem Abstand stromabwärts des Expansionsseils (20b) angeordnet ist und einen Durchmesser hat, der größer ist als der Einlaufteil stromabwärts des Dichtungselements, wobei das Dichtungselement (30) so ausgebildet ist, dass dieses einen effektiven Dichtungssitz bildet, der das Fluid in dem Fluidvolumen (21) daran hindert, das Lumen des stromaufwärts des Dichtungselements zu erreichen.

## Revendications

1. Procédé de fabrication d'un tube à orientation biaxiale à partir d'un matériau thermoplastique, dans lequel un tube (10) à l'état de préforme ayant une paroi, une face interne et une face externe est extrudé à partir d'un matériau thermoplastique à l'aide d'une extrudeuse (1) qui est pourvue d'une tête d'extrudeuse (3) ayant un élément filière interne (5), l'élément filière interne formant une lumière dans le tube à l'état de préforme, dans lequel le tube à l'état de préforme est soumis à un conditionnement en température au moyen de dispositifs de tempérage, de sorte qu'un tube tempéré à l'état de préforme est obtenu, ayant une température d'orientation dans une plage de températures d'orientation cible qui convient au matériau thermoplastique, et dans lequel il est fait usage d'un dispositif de dilatation (20) dans la lumière du tube en aval de l'extrudeuse, ledit dispositif de dilatation comprenant :
- une partie d'étanchéité amont (30),
- une partie d'étanchéité aval (20b),
- un ou plusieurs conduits d'alimentation de fluide (27a, b), lesdits un ou plusieurs conduits d'alimentation de fluide ayant un ou plusieurs orifices dans une surface externe du dispositif de dilatation entre lesdites parties d'étanchéité amont et aval ;
et dans lequel il est fait usage d'un dispositif d'alimentation de fluide qui fournit un fluide sous pression, de préférence un gaz, auxdits un ou plusieurs conduits d'alimentation de fluide de sorte qu'un volume de fluide (21) est établi entre le tube tempéré et le dispositif de dilatation, ledit volume de fluide étant délimité à son extrémité amont par ladite partie d'étanchéité amont (30) et à son extrémité aval par ladite partie d'étanchéité aval (20b), dans lequel ledit volume de fluide rempli provoque une dilatation progressive du tube due à la pression de fluide interne avant que le tube n'entre en contact avec la partie d'étanchéité aval du dispositif de dilatation,
dans lequel lesdits dispositifs de tempérage comprennent un premier dispositif de refroidissement externe (8) qui est agencé en aval de l'extrudeuse (1) et de la tête d'extrusion (3) et qui refroidit de manière externe le tube à l'état de préforme,
dans lequel, de préférence, un dispositif d'étirage amont (15) est agencé en aval dudit premier dispositif de refroidissement externe (8), ledit dispositif d'étirage amont comprenant des éléments de frottement, par exemple plusieurs rails, qui viennent en prise avec la face externe du tube à l'état de préforme, la vitesse des éléments de frottement étant commandée par un système d'entraînement,
dans lequel ledit premier dispositif de refroidissement externe (8) refroidit le tube à l'état de préforme de manière à obtenir un profil de température sur toute la paroi du tube avec une couche externe à une température basse, de préférence à une température à laquelle ladite couche est capable de résister à sa mise en prise par lesdits éléments de frottement s'il y en a,
dans lequel lesdits dispositifs de tempérage comprennent en outre un dispositif d'échange de chaleur (16) et un dispositif de conditionnement (18) qui sont agencés en série en aval du premier dispositif de refroidissement externe, de préférence en aval du dispositif d'étirage amont (15) s'il y a un, et avant la partie d'étanchéité amont (30),
dans lequel la face externe dudit tube à l'état de préforme est exposée par ledit dispositif de conditionnement (18) dans une ou plusieurs sections successives dudit dispositif de conditionnement à une température de conditionnement qui est - dans chaque section - uniforme dans la direction circonférentielle du tube de sorte que ledit dispositif de conditionnement amène le profil de température sur toute la paroi du tube à l'état de préforme à s'équilibrer vers un profil de température dans ladite plage de températures d'orientation cible avant l'emplacement où se produit la dilatation du tube par pression de fluide,
dans lequel un dispositif d'étirage aval (50) est agencé en aval du dispositif de dilatation (20) et agit sur le tube (10), d'une manière telle que ledit tube est transformé d'un tube à l'état de préforme en un tube à orientation biaxiale avec un matériau thermoplastique qui est orienté dans une direction axiale et dans une direction circonférentielle du tube,
et dans lequel un ou plusieurs dispositifs de refroidissement aval (60, 70, 80) refroidissent le tube à orientation biaxiale,
**caractérisé en ce que**
la section du dispositif de conditionnement (18) se présente comme une chambre d'air chaud ou une étuve dans laquelle circule un air à température d'air constante, air en circulation auquel est exposée la face externe du tube à l'état de préforme,
et **en ce que**
il est fait usage d'un système de détection de température avec un ou plusieurs capteurs de température (40a, b ; 41a, b) qui mesurent la température du tube à l'état de préforme en plusieurs points dans la direction circonférentielle du tube à un ou plusieurs emplacements en aval du dispositif de conditionnement (18), et avant la dilatation progressive du tube par ledit volume de fluide (21),
et **en ce que**
ledit dispositif d'échange de chaleur (16, 16a) - qui est agencé en aval du premier dispositif de refroidissement externe, de préférence en aval du dispositif d'étirage amont (15) s'il y a un, et en amont du dispositif de conditionnement (18) - est un dispositif d'échange de chaleur pouvant être commandé par secteur qui est conçu et utilisé pour échanger de la chaleur avec le tube à l'état de préforme d'une manière pouvant être commandée par secteur, dans lequel le tube est considéré comme divisé en plusieurs secteurs imaginaires autour de sa circonférence et le dispositif d'échange de chaleur pouvant être commandé par secteur est conçu et utilisé pour régler l'échange de chaleur avec chaque secteur du tube indépendamment de l'échange de chaleur avec lesdites une ou plusieurs autres sections,
et **en ce que**
ledit dispositif d'échange de chaleur pouvant être commandé par secteur (16) est commandé (17) sur la base d'une comparaison entre les températures qui sont mesurées par le système de détection de température, d'une part, et ladite plage de températures d'orientation cible, d'autre part.

2. Procédé selon la revendication 1, dans lequel le système de détection de température comprend un ou plusieurs capteurs de température internes (40a, b) qui mesurent la température de la face interne du tube à l'état de préforme en amont ou au niveau de la partie d'étanchéité amont (30) du dispositif de dilatation, et/ou comprend un ou plusieurs capteurs de température externes (41a, b) qui mesurent la température de la face externe du tube à l'état de préforme en amont ou au niveau de la partie d'étanchéité amont (30) du dispositif de dilatation (20),
et dans lequel lesdites températures mesurées par lesdits capteurs de température internes et/ou externes sont utilisées pour établir le profil de température réel sur toute la paroi du tube (10) à l'état de préforme,
et dans lequel ledit dispositif d'échange de chaleur pouvant être commandé par secteur est commandé sur la base d'une comparaison entre le profil de température réel sur toute la paroi du tube à l'état de préforme, d'une part, et le profil de température d'orientation cible sur toute la paroi du tube, d'autre part.

3. Procédé selon une ou plusieurs des revendications précédentes, dans lequel le temps de séjour du tube à l'état de préforme à l'intérieur du dispositif de conditionnement (18) est sensiblement plus long que dans le dispositif d'échange de chaleur précédent (16), de préférence au moins 5 fois plus long, par exemple entre 5 et 30 fois plus long.

4. Procédé selon une ou plusieurs des revendications précédentes, dans lequel la tête d'extrusion (3) est pourvue de moyens permettant de commander et de régler le passage annulaire afin de commander l'épaisseur de la paroi et/ou la forme de section transversale du tube à l'état de préforme sortant de la tête d'extrusion, et dans lequel un dispositif de mesure (6) est agencé directement en aval de la tête d'extrusion et mesure le tube à l'état de préforme sortant pour fournir des signaux de commande pour le passage annulaire de la tête d'extrusion.

5. Procédé selon une ou plusieurs des revendications précédentes, dans lequel la matière plastique est le PVC et dans lequel le premier dispositif de refroidissement externe (8) refroidit le tube jusqu'à une température de la couche externe d'environ 55 à 70°C, de préférence telle que la masse de chaleur à l'intérieur de la paroi du tube soit entre 85 et 110 % de la masse de chaleur du tube lorsqu'il se trouve dans la plage de températures d'orientation cible.

6. Procédé selon une ou plusieurs des revendications précédentes, dans lequel le dispositif d'échange de chaleur pouvant être commandé par secteur (16) comprend plusieurs unités d'échange de chaleur pouvant être commandées de manière indépendante (16a) qui sont placées à des endroits espacés de manière circonférentielle autour du tube, par exemple des unités de chauffage infrarouge.

7. Procédé selon une ou plusieurs des revendications précédentes, dans lequel il est fait usage d'un dispositif de dilatation (20) avec une pièce de dilatation indéformable (20b) ayant un diamètre qui augmente progressivement jusqu'à un diamètre maximal à l'extrémité aval de celle-ci, ladite pièce de dilatation étant mise en contact avec le tube qui a été progressivement dilaté par ledit volume de fluide (21) et agissant ainsi en tant que partie d'étanchéité aval du volume de fluide, ladite pièce de dilatation (20b) exerçant une force de dilatation sur le tube de manière à entraîner une dilatation supplémentaire du tube.

8. Procédé selon la revendication 7, dans lequel il est fait usage d'un dispositif de dilatation (20) avec une pièce de prolongement (20a) qui est pourvue d'un élément d'étanchéité (30) qui est mis en prise de manière étanche par le tube à l'état de préforme, ledit élément d'étanchéité (30) étant agencé à une certaine distance en amont de la pièce de dilatation (20b) et ayant un diamètre qui est supérieur à celui de la pièce de prolongement en aval de l'élément d'étanchéité, l'élément d'étanchéité (30) formant une étanchéité efficace qui empêche le fluide du volume de fluide (21) d'atteindre la lumière du tube en amont de l'élément d'étanchéité.

9. Procédé selon la revendication 7, dans lequel il est fait usage d'un dispositif de dilatation ayant une pièce de bifurcation (20c) en aval de la pièce de dilatation (20b), et dans lequel un second volume de fluide (22) est établi entre la pièce de bifurcation (20c) du dispositif de dilatation et le tube orienté, de préférence entre une section de diamètre réduit de la pièce de bifurcation et le tube orienté, et dans lequel de préférence, le fluide fourni audit second volume de fluide est un gaz sous pression, par exemple de l'air.

10. Procédé selon la revendication 9, dans lequel la pièce de bifurcation (20c) a une section de diamètre réduit ayant un diamètre inférieur au diamètre maximal de la pièce de dilatation,
et dans lequel au moins un élément annulaire de diamètre externe (90, 91) est agencé autour de ladite section de diamètre réduit,
et dans lequel l'élément annulaire de diamètre externe (90, 91) est agencé de telle sorte que le tube orienté passe à travers l'élément annulaire tout en étant en contact avec ledit élément annulaire, l'élément annulaire de diamètre externe et la section de diamètre réduit étant dimensionnés de manière à éviter que le tube orienté ne soit saisi entre la pièce de bifurcation et l'au moins un élément annulaire de diamètre externe, de préférence, la partie intérieure du tube orienté étant espacée radialement de la section de diamètre réduit, le dispositif de dilatation ayant un ou plusieurs conduits d'alimentation de fluide ayant un ou plusieurs orifices dans la section de diamètre réduit, un gaz étant fourni entre ladite section de diamètre réduit et le tube orienté pour établir le second volume de fluide (22),
et dans lequel il est fait usage d'un dispositif de refroidissement externe (60) qui est conçu et utilisé pour refroidir le tube orienté de manière externe tout en passant par-dessus la pièce de bifurcation (20c).

11. Installation de fabrication d'un tube à orientation biaxiale à partir d'un matériau thermoplastique, ladite installation comprenant une extrudeuse (1) qui est pourvue d'une tête d'extrudeuse (3) ayant un élément filière interne (5), dans laquelle un tube (10) à l'état de préforme ayant une paroi, une face interne et une face externe est extrudé à partir d'un matériau thermoplastique, et dans laquelle l'élément filière interne forme une lumière dans le tube à l'état de préforme,
dans laquelle l'installation comprend des dispositifs de tempérage qui sont conçus pour soumettre le tube à l'état de préforme à un conditionnement en température, de sorte qu'un tube tempéré à l'état de préforme est obtenu, ayant une température d'orientation dans une plage de températures d'orientation cible qui convient au matériau thermoplastique,
et dans laquelle l'installation comprend un dispositif de dilatation (20) dans la lumière du tube en aval de l'extrudeuse, ledit dispositif de dilatation comprenant :
- une partie d'étanchéité amont (30),
- une partie d'étanchéité aval (20b),
- un ou plusieurs conduits d'alimentation de fluide (27a, b), lesdits un ou plusieurs conduits d'alimentation de fluide ayant un ou plusieurs orifices dans une surface externe du dispositif de dilatation entre lesdites parties d'étanchéité amont et aval ;
et dans laquelle l'installation comprend un dispositif d'alimentation de fluide (55) qui est conçu pour fournir un fluide sous pression, de préférence un gaz, auxdits un ou plusieurs conduits d'alimentation de fluide de sorte qu'un volume de fluide (21) est établi entre le tube tempéré et le dispositif de dilatation, ledit volume de fluide étant délimité à son extrémité amont par ladite partie d'étanchéité amont et à son extrémité aval par ladite partie d'étanchéité aval, dans laquelle ledit volume de fluide rempli provoque une dilatation progressive du tube due à la pression de fluide interne avant que le tube n'entre en contact avec la partie d'étanchéité aval du dispositif de dilatation,
dans laquelle lesdits dispositifs de tempérage comprennent un premier dispositif de refroidissement externe (8) qui est agencé en aval de l'extrudeuse et de la tête d'extrusion et qui est conçu pour refroidir de manière externe le tube à l'état de préforme,
dans laquelle, de préférence, un dispositif d'étirage amont (15) est agencé en aval dudit premier dispositif de refroidissement externe (8), ledit dispositif d'étirage amont (15) comprenant des éléments de frottement, par exemple plusieurs rails, qui sont conçus pour venir en prise avec la face externe du tube à l'état de préforme, la vitesse des éléments de frottement étant commandée par un système d'entraînement,
dans laquelle ledit premier dispositif de refroidissement externe est conçu pour refroidir le tube (10) à l'état de préforme de manière à obtenir un profil de température sur toute la paroi du tube avec une couche externe à une température basse, de préférence une température à laquelle ladite couche est capable de résister à sa mise en prise par lesdits éléments de frottement s'il y en a,
dans laquelle lesdits dispositifs de tempérage comprennent en outre un dispositif d'échange de chaleur (16) et un dispositif de conditionnement (18) qui sont agencés en série en aval du premier dispositif de refroidissement externe, de préférence en aval du dispositif d'étirage amont (15) s'il y a un, et avant la partie d'étanchéité amont (30),
dans laquelle ledit dispositif de conditionnement (18) est conçu pour exposer la face externe du tube en préforme dans une ou plusieurs sections successives dudit dispositif de conditionnement à une température de conditionnement qui est - dans chaque section - uniforme dans la direction circonférentielle du tube de sorte que ledit dispositif de conditionnement amène le profil de température sur toute la paroi du tube à l'état de préforme à s'équilibrer vers un profil de température dans ladite plage de températures d'orientation cible avant l'emplacement où se produit la dilatation du tube par pression de fluide,
dans laquelle un dispositif d'étirage aval (50) est agencé en aval du dispositif de dilatation et est conçu pour agir sur le tube, d'une manière telle que ledit tube est transformé d'un tube à l'état de préforme en un tube à orientation biaxiale avec un matériau thermoplastique qui est orienté dans une direction axiale et dans une direction circonférentielle du tube,
et dans laquelle un ou plusieurs dispositifs de refroidissement aval (60, 70, 80) sont prévus pour refroidir le tube à orientation biaxiale,
**caractérisée en ce que**
la section du dispositif de conditionnement (18) se présente comme une chambre d'air chaud ou une étuve dans laquelle circule un air à température d'air constante, air en circulation auquel est exposée la face externe du tube à l'état de préforme,
et **en ce que**
l'installation comprend un système de détection de température avec un ou plusieurs capteurs de température (40a,b ; 41 a, b) qui sont conçus pour mesurer la température du tube à l'état de préforme en plusieurs points dans la direction circonférentielle du tube à un ou plusieurs emplacements en aval du dispositif de conditionnement (18), et avant la dilatation progressive du tube par ledit volume de fluide (21),
et **en ce que**
ledit dispositif d'échange de chaleur (16) - qui est agencé en aval du premier dispositif de refroidissement externe, de préférence en aval du dispositif d'étirage amont (15), et en amont du dispositif de conditionnement (18) - est un dispositif d'échange de chaleur pouvant être commandé par secteur qui est conçu pour échanger de la chaleur avec le tube à l'état de préforme d'une manière pouvant être commandée par secteur, dans laquelle le tube est considéré comme divisé en plusieurs secteurs imaginaires autour de sa circonférence et le dispositif d'échange de chaleur pouvant être commandé par secteur est conçu pour régler l'échange de chaleur avec chaque secteur du tube indépendamment de l'échange de chaleur avec lesdites une ou plusieurs autres sections,
et **en ce que**
ledit dispositif d'échange de chaleur pouvant être commandé par secteur (16) est conçu pour être commandé sur la base d'une comparaison entre les températures qui sont mesurées par le système de détection de température, d'une part, et ladite plage de températures d'orientation cible, d'autre part.

12. Installation selon la revendication 11, dans laquelle le système de détection de température comprend un ou plusieurs capteurs de température internes (40a, b) qui mesurent la température de la face interne du tube à l'état de préforme en amont ou au niveau de la partie d'étanchéité amont (30) du dispositif de dilatation, et comprend un ou plusieurs capteurs de température externes (41a, b) qui mesurent la température de la face externe du tube à l'état de préforme en amont ou au niveau de la partie d'étanchéité amont (30) du dispositif de dilatation (20),
et dans laquelle le système est conçu pour établir le profil de température réel sur toute la paroi du tube (10) à l'état de préforme sur la base desdites températures mesurées par lesdits capteurs de température internes et externes, et dans laquelle le système est conçu pour commander ledit dispositif d'échange de chaleur pouvant être commandé par secteur sur la base d'une comparaison entre le profil de température réel sur toute la paroi du tube à l'état de préforme, d'une part, et le profil de température d'orientation cible sur toute la paroi du tube, d'autre part.

13. Installation selon une ou plusieurs des revendications précédentes 11 à 12, dans laquelle le dispositif de conditionnement (18) est sensiblement plus long que le dispositif d'échange de chaleur précédent (16), de préférence au moins 5 fois plus long, par exemple entre 5 et 30 fois plus long.

14. Installation selon une ou plusieurs des revendications précédentes 11 à 13, dans laquelle le dispositif de dilatation (20) a une pièce de dilatation indéformable (20b) ayant un diamètre qui augmente progressivement jusqu'à un diamètre maximal à l'extrémité aval de celle-ci, ladite pièce de dilatation étant mise en contact avec le tube qui a été progressivement dilaté par ledit volume de fluide (21) et agissant ainsi en tant que partie d'étanchéité aval du volume de fluide, ladite pièce de dilatation (20b) étant conçue pour exercer une force de dilatation sur le tube de manière à entraîner une dilatation supplémentaire du tube.

15. Installation selon une ou plusieurs des revendications précédentes 11 à 14, dans laquelle le dispositif de dilatation (20) a une pièce de prolongement (20a) qui est pourvue d'un élément d'étanchéité (30) qui est mise en prise de manière étanche par le tube à l'état de préforme, ledit élément d'étanchéité (30) étant agencé à une certaine distance en amont de la pièce de dilatation (20b) et ayant un diamètre qui est supérieur à la pièce de prolongement en aval de l'élément d'étanchéité, l'élément d'étanchéité (30) étant conçu pour former une étanchéité efficace qui empêche le fluide du volume de fluide (21) d'atteindre la lumière du tube en amont de l'élément d'étanchéité.
